# EUROPEAN PATENT APPLICATION

(11) **EP 4 318 405 A1**
(43) Date of publication of application: **07.02.2024**
(21) Application number: 22779588.7
(22) Date of filing: 14.02.2022
(51) Int. Cl.: G06T 15/20

(54) **IMAGE PROCESSING DEVICE, IMAGE PROCESSING METHOD, AND PROGRAM**

(30) Priority: 31.03.2021 JP 2021061678
(71) Applicant: FUJIFILM Corporation, Tokyo 106-8620 (JP)
(72) Inventor: AOKI, Takashi, Saitama-shi, Saitama 331-9624 (JP); MIYATA, Masahiko, Saitama-shi, Saitama 331-9624 (JP); HAYASHI, Kenkichi, Saitama-shi, Saitama 331-9624 (JP); MURAKAMI, Yasunori, Saitama-shi, Saitama 331-9624 (JP)
(74) Representative: Hughes, Andrea Michelle
(86) International application number: PCT/JP2022/005747
(87) International publication number: WO 2022/209361

(57) **Abstract**

An image processing apparatus includes a processor, and a memory connected to or built in the processor. The processor acquires a virtual viewpoint image generated based on a plurality of captured images, and outputs, based on first information associated with a first region related to the virtual viewpoint image and specific image relation information related to a plurality of specific images that are not included in the plurality of captured images, first data for displaying a first specific image selected from among the plurality of specific images in the first region.

## Description

### BACKGROUND OF THE INVENTION

### 1. Field of the Invention

The technology of the present disclosure relates to an image processing apparatus, an image processing method, and a program.

### 2. Description of the Related Art

JP2020-101897A discloses an information processing apparatus including an acquisition unit that acquires virtual viewpoint information indicating a position and a direction of a virtual viewpoint corresponding to a virtual viewpoint image generated based on a plurality of captured images captured from directions different from each other by using a plurality of imaging apparatuses, a determination unit that decides, based on information indicating an advertisement frame set in advance in a virtual space and the virtual viewpoint information, an amount of money according to a display aspect of an advertisement image displayed in the advertisement frame in the virtual viewpoint image corresponding to the virtual viewpoint indicated by the virtual viewpoint information.

WO2016/194441A discloses a stereoscopic advertisement frame decision system that is configured by using a user terminal that receives content data formed of a free viewpoint moving image in which a viewing viewpoint can be changed from a distribution computer, displays moving image data from a specific viewpoint on a display unit, and displays, in a case in which an operator gives viewpoint characteristic changing data that changes viewpoint characteristics to the displayed specific viewpoint moving image data, the specific viewpoint moving image data on the display unit based on the viewpoint characteristic changing data, and a stereoscopic advertisement frame decision computer, in which A) the user terminal further comprises a focused space decision unit that decides a focused space in the specific viewpoint moving image based on the specific viewpoint moving image data displayed on the display unit, and a transmission unit that transmits transitional history of the focused space to the stereoscopic advertisement frame decision computer, B) the stereoscopic advertisement frame decision computer comprises a user-specific history data reception unit that receives the transitional history of the content data as user-specific history data, and a stereoscopic advertisement frame decision unit that decides a content-specific stereoscopic advertisement frame obtained from the user-specific history data.

JP2020-101847A discloses an image file generation apparatus that generates an image file for generating a virtual viewpoint image, the image file generation apparatus comprising a material information acquisition unit that acquires material information used for the generation of the virtual viewpoint image, an additional information acquisition unit that acquires additional information to be displayed on the virtual viewpoint image, and an image file generation unit that generates the image file including the material information and the additional information.

### SUMMARY OF THE INVENTION

One embodiment according to the technology of the present disclosure provides an image processing apparatus, an image processing method, and a program which can show a specific image to a viewer who views a virtual viewpoint image.

A first aspect according to the technology of the present disclosure relates to an image processing apparatus comprising a processor, and a memory connected to or built in the processor, in which the processor acquires a virtual viewpoint image generated based on a plurality of captured images, and outputs, based on first information associated with a first region related to the virtual viewpoint image and specific image relation information related to a plurality of specific images that are not included in the plurality of captured images, first data for displaying a first specific image selected from among the plurality of specific images in the first region.

A second aspect according to the technology of the present disclosure relates to the image processing apparatus according to the first aspect, in which the first information includes first content relation information related to a content of the virtual viewpoint image.

A third aspect according to the technology of the present disclosure relates to the image processing apparatus according to the second aspect, in which the specific image relation information includes second content relation information related to a content of the specific image, and the first specific image is a specific image related to the specific image relation information including the second content relation information corresponding to the first content relation information among the plurality of specific images.

A fourth aspect according to the technology of the present disclosure relates to the image processing apparatus according to any one of the first to third aspects, in which the first information includes first advertisement effect relation information related to an advertisement effect.

A fifth aspect according to the technology of the present disclosure relates to the image processing apparatus according to any one of the first to fourth aspects, in which the first information includes first size relation information related to a size in which the first specific image is displayed in the first region.

A sixth aspect according to the technology of the present disclosure relates to the image processing apparatus according to any one of the first to fifth aspects, in which the first information includes first viewpoint information required for generation of the virtual viewpoint image.

A seventh aspect according to the technology of the present disclosure relates to the image processing apparatus according to the sixth aspect, in which the first viewpoint information includes information related to a first viewpoint path.

An eighth aspect according to the technology of the present disclosure relates to the image processing apparatus according to any one of the first to seventh aspects, in which the first information includes first display time relation information related to a time in which the first region is displayed.

A ninth aspect according to the technology of the present disclosure relates to the image processing apparatus according to the eighth aspect, in which the first display time relation information is information related to a time in which the first region is continuously displayed.

A tenth aspect according to the technology of the present disclosure relates to the image processing apparatus according to the eighth or ninth aspect, in which the specific image is a moving image, the specific image relation information includes a playback total time of the moving image, and the processor generates the first data based on the first display time relation information and the playback total time.

An eleventh aspect according to the technology of the present disclosure relates to the image processing apparatus according to any one of the eighth to tenth aspects, in which the specific image is a moving image, the specific image relation information includes a playback total time of the moving image, and the processor selects the first specific image based on the first display time relation information and the playback total time.

A twelfth aspect according to the technology of the present disclosure relates to the image processing apparatus according to any one of the first to eleventh aspects, in which the virtual viewpoint image is a moving image, and the first information includes first timing relation information related to a timing at which the first region is included in the virtual viewpoint image.

A thirteenth aspect according to the technology of the present disclosure relates to the image processing apparatus according to any one of the first to twelfth aspects, in which the first information includes first movement speed relation information related to a movement speed of a first viewpoint required for generation of the virtual viewpoint image.

A fourteenth aspect according to the technology of the present disclosure relates to the image processing apparatus according to any one of the first to thirteenth aspects, in which the first information is changed according to at least one of a viewpoint position, a visual line direction, or an angle of view required for generation of the virtual viewpoint image.

A fifteenth aspect according to the technology of the present disclosure relates to the image processing apparatus according to any one of the first to fourteenth aspects, in which the processor further outputs, based on second information associated with a second region related to the virtual viewpoint image and the specific image relation information, second data for displaying a second specific image selected from among the plurality of specific images in the second region.

A sixteenth aspect according to the technology of the present disclosure relates to the image processing apparatus according to the fifteenth aspect, in which the second information includes second advertisement effect relation information related to an advertisement effect.

A seventeenth aspect according to the technology of the present disclosure relates to the image processing apparatus according to the fifteenth or sixteenth aspect, in which the second information includes second size relation information related to a size in which the second specific image is displayed in the second region.

An eighteenth aspect according to the technology of the present disclosure relates to the image processing apparatus according to any one of the fifteenth to seventeenth aspects, in which the second information includes second viewpoint information required for generation of the virtual viewpoint image.

A nineteenth aspect according to the technology of the present disclosure relates to the image processing apparatus according to the eighteenth aspect, in which the second viewpoint information includes information related to a second viewpoint path.

A twentieth aspect according to the technology of the present disclosure relates to the image processing apparatus according to any one of the fifteenth to nineteenth aspects, in which the second information includes second display time relation information related to a time in which the second region is displayed.

A twenty-first aspect according to the technology of the present disclosure relates to the image processing apparatus according to the twentieth aspect, in which the second display time relation information is information related to a time in which the second region is continuously displayed.

A twenty-second aspect according to the technology of the present disclosure relates to the image processing apparatus according to the twentieth aspect, in which the specific image is a moving image, the specific image relation information includes a playback total time of the moving image, and the processor generates the second data based on the second display time relation information and the playback total time.

A twenty-third aspect according to the technology of the present disclosure relates to the image processing apparatus according to any one of the twentieth to twenty-second aspects, in which the specific image is a moving image, the specific image relation information includes a playback total time of the moving image, and the processor selects the second specific image based on the second display time relation information and the playback total time.

A twenty-fourth aspect according to the technology of the present disclosure relates to the image processing apparatus according to any one of the fifteenth to twenty-third aspects, in which the virtual viewpoint image is a moving image, and the second information includes second timing relation information related to a timing at which the second region is included in the virtual viewpoint image.

A twenty-fifth aspect according to the technology of the present disclosure relates to the image processing apparatus according to any one of the fifteenth to twenty-fourth aspects, in which the second information includes second movement speed relation information related to a movement speed of a second viewpoint required for generation of the virtual viewpoint image.

A twenty-sixth aspect according to the technology of the present disclosure relates to the image processing apparatus according to any one of the fifteenth to twenty-fifth aspects, in which the second information is changed according to at least one of a viewpoint position, a visual line direction, or an angle of view required for generation of the virtual viewpoint image.

A twenty-seventh aspect according to the technology of the present disclosure relates to the image processing apparatus according to any one of the first to twenty-sixth aspects, in which the specific image relation information includes charge information of a side that provides the specific image.

A twenty-eighth aspect according to the technology of the present disclosure relates to the image processing apparatus according to any one of the first to twenty-seventh aspects, in which a display aspect of the specific image is changed according to a viewpoint used for generation of the virtual viewpoint image.

A twenty-ninth aspect according to the technology of the present disclosure relates to an image processing apparatus comprising a processor, and a memory connected to or built in the processor, in which the processor acquires a virtual viewpoint image generated based on a plurality of captured images, and outputs, based on region relation information associated with a plurality of regions related to the virtual viewpoint image and specific image relation information related to a specific image that is not included in the plurality of captured images, data for displaying the specific image in at least one of the plurality of regions.

A thirtieth aspect according to the technology of the present disclosure relates to the image processing apparatus according to the twenty-ninth aspect, in which timings at which the plurality of regions are displayed are different from each other.

A thirty-first aspect according to the technology of the present disclosure relates to an image processing method comprising acquiring a virtual viewpoint image generated based on a plurality of captured images, and outputting, based on first information associated with a first region related to the virtual viewpoint image and specific image relation information related to a plurality of specific images that are not included in the plurality of captured images, first data for displaying a first specific image selected from among the plurality of specific images in the first region.

A thirty-second aspect according to the technology of the present disclosure relates to an image processing method comprising acquiring a virtual viewpoint image generated based on a plurality of captured images, and outputting, based on region relation information associated with a plurality of regions related to the virtual viewpoint image and specific image relation information related to a specific image that is not included in the plurality of captured images, data for displaying the specific image in at least one of the plurality of regions.

A thirty-third aspect according to the technology of the present disclosure relates to a program for causing a computer to execute a process comprising acquiring a virtual viewpoint image generated based on a plurality of captured images, and outputting, based on first information associated with a first region related to the virtual viewpoint image and specific image relation information related to a plurality of specific images that are not included in the plurality of captured images, first data for displaying a first specific image selected from among the plurality of specific images in the first region.

A thirty-fourth aspect according to the technology of the present disclosure relates to a program for causing a computer to execute a process comprising acquiring a virtual viewpoint image generated based on a plurality of captured images, and outputting, based on region relation information associated with a plurality of regions related to the virtual viewpoint image and specific image relation information related to a specific image that is not included in the plurality of captured images, data for displaying the specific image in at least one of the plurality of regions.

### BRIEF DESCRIPTION OF THE DRAWINGS

Fig. 1 is a conceptual diagram showing an example of a configuration of an image processing system.
Fig. 2 is a block diagram showing an example of a hardware configuration of an electric system of a user device.
Fig. 3 is a block diagram showing an example of a function of a main unit of a CPU of an image processing apparatus.
Fig. 4 is a conceptual diagram showing an example of processing contents of a reception screen generation unit, and an example of display contents of a display of the user device.
Fig. 5 is a screen view showing an example of a display aspect of a reception screen in a case in which an operation mode of the user device is a viewpoint setting mode.
Fig. 6 is a screen view showing an example of a display aspect of the reception screen in a case in which the operation mode of the user device is a gaze point setting mode.
Fig. 7 is a block diagram showing an example of contents of viewpoint information and an example of an aspect in which the viewpoint information is transmitted from the user device to the image processing apparatus.
Fig. 8 is a conceptual diagram showing an example of processing contents of a virtual viewpoint image generation unit.
Fig. 9 is a conceptual diagram showing an example of processing contents of a screen data generation unit according to a first embodiment.
Fig. 10 is a conceptual diagram showing an example of the processing contents of the screen data generation unit according to the first embodiment.
Fig. 11 is a flowchart showing an example of storage contents of a storage provided in the image processing apparatus of the image processing system according to the first embodiment.
Fig. 12 is a conceptual diagram showing an example of the processing contents of the screen data generation unit according to the first embodiment.
Fig. 13 is a schematic screen view showing an example of a virtual viewpoint video screen displayed on a touch panel display of the user device according to the first embodiment.
Fig. 14 is a flowchart showing an example of a flow of screen generation processing according to the first embodiment.
Fig. 15 is a conceptual diagram showing an example of processing contents of a screen data generation unit according to a second embodiment.
Fig. 16 is a conceptual diagram showing an example of storage contents of a storage provided in an image processing apparatus of an image processing system according to the second embodiment.
Fig. 17 is a conceptual diagram showing an example of the processing contents of the screen data generation unit according to the second embodiment.
Fig. 18 is a schematic screen view showing an example of a virtual viewpoint video screen displayed on a touch panel display of a user device according to the second embodiment.
Fig. 19A is a flowchart showing an example of a flow of screen generation processing according to the second embodiment.
Fig. 19B is a continuation of the flowchart shown in Fig. 19A.
Fig. 20 is a conceptual diagram showing an example of first advertisement region relation information and second advertisement region relation information according to a first modification example.
Fig. 21 is a conceptual diagram showing an example of advertisement video relation information according to the first modification example.
Fig. 22 is a conceptual diagram showing an example of first advertisement region relation information and second advertisement region relation information according to a second modification example.
Fig. 23 is a conceptual diagram showing an example of advertisement video relation information according to the second modification example.
Fig. 24 is a conceptual diagram showing an example of first advertisement region relation information and second advertisement region relation information according to a third modification example.
Fig. 25 is a conceptual diagram showing an example of advertisement video relation information according to the third modification example.
Fig. 26 is a conceptual diagram showing an example of first advertisement region relation information and second advertisement region relation information according to a fourth modification example.
Fig. 27 is a conceptual diagram showing an example of advertisement video relation information according to the fourth modification example.
Fig. 28 is a conceptual diagram showing an example of first advertisement region relation information and second advertisement region relation information according to a fifth modification example.
Fig. 29 is a conceptual diagram showing an example of processing contents of a screen data generation unit according to the fifth modification example.
Fig. 30 is a conceptual diagram showing an example of advertisement video relation information according to a sixth modification example.
Fig. 31 is a conceptual diagram showing an example of the advertisement video relation information according to the sixth modification example.
Fig. 32 is a conceptual diagram showing an example of first advertisement region relation information and second advertisement region relation information according to a seventh modification example.
Fig. 33 is a conceptual diagram showing an example of advertisement video relation information according to the seventh modification example.
Fig. 34 is a conceptual diagram showing an example of processing contents of a screen data generation unit according to a ninth modification example.
Fig. 35 is a conceptual diagram showing an example of processing contents of a screen data generation unit according to a tenth modification example.
Fig. 36 is a conceptual diagram showing an example of an aspect in which a screen generation processing program stored in a storage medium is installed in a computer of the image processing apparatus.

### DESCRIPTION OF THE PREFERRED EMBODIMENTS

An example of an embodiment of an image processing apparatus, an image processing method, and a program according to the technology of the present disclosure will be described with reference to the accompanying drawings.

First, the terms used in the description below will be described.

CPU refers to an abbreviation of "central processing unit". GPU refers to an abbreviation of "graphics processing unit". TPU refers to an abbreviation of "tensor processing unit". SSD refers to an abbreviation of "solid state drive". HDD refers to an abbreviation of "hard disk drive". EEPROM refers to an abbreviation of "electrically erasable and programmable read only memory". I/F refers to an abbreviation of "interface". ASIC refers to an abbreviation of "application specific integrated circuit". PLD refers to an abbreviation of "programmable logic device". FPGA refers to an abbreviation of "field-programmable gate array". SoC refers to an abbreviation of "system-on-a-chip". CMOS refers to an abbreviation of "complementary metal oxide semiconductor". CCD refers to an abbreviation of "charge coupled device". EL refers to an abbreviation of "electroluminescence". LAN refers to an abbreviation of "local area network". USB refers to an abbreviation of "universal serial bus". "HMD" refers to an abbreviation of "head mounted display". LTE refers to an abbreviation of "long term evolution". 5G refers to an abbreviation of "5th generation (wireless technology for digital cellular networks)". TDM refers to an abbreviation of "time-division multiplexing". AI refers to an abbreviation of "artificial intelligence". In addition, in the present specification, a subject included in an image (image in a sense including a still image and a moving image) refers to a subject included as a picture (for example, an electronic picture) in the image. In addition, in the description of the present specification, "match" refers to the match in the sense of including an error generally allowed in the technical field to which the technology of the present disclosure belongs, that is, an error to the extent that it does not contradict the gist of the technology of the present disclosure, in addition to the exact match.

### [First Embodiment]

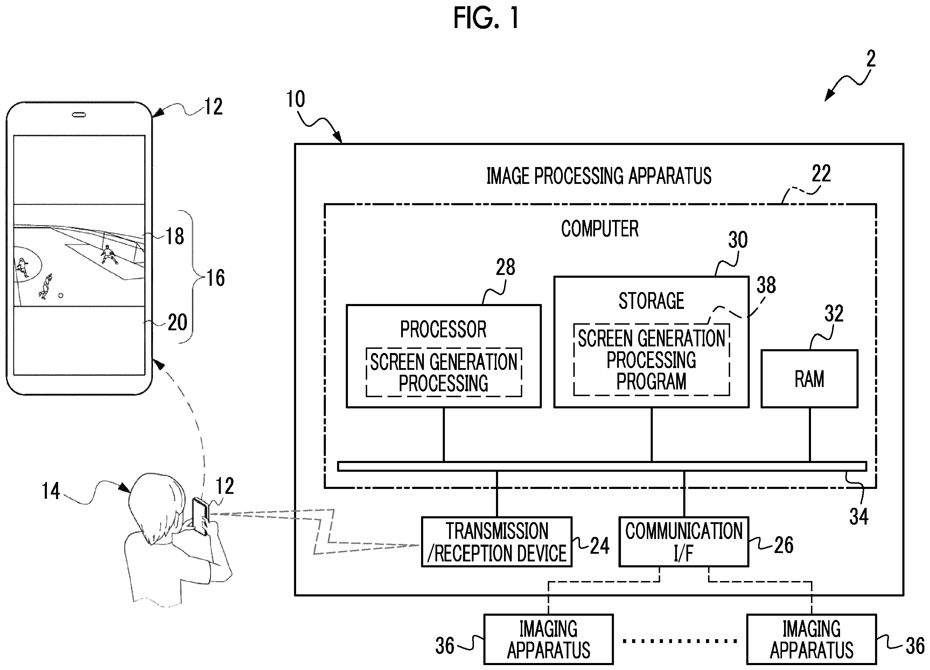

As an example, as shown in Fig. 1, an image processing system 2 comprises an image processing apparatus 10 and a user device 12.

In the first embodiment, a server is applied as an example of the image processing apparatus 10. The server is realized by a main frame, for example. It should be noted that this is merely an example, and for example, the server may be realized by network computing, such as cloud computing, fog computing, edge computing, or grid computing. In addition, the image processing apparatus 10 may be a plurality of servers, may be a workstation, may be a personal computer, may be an apparatus in which at least one workstation and at least one personal computer are combined, may be an apparatus in which at least one workstation, at least one personal computer, and at least one server are combined, or the like.

Moreover, in the first embodiment, a smartphone is applied as an example of the user device 12. It should be noted that the smartphone is merely an example, and for example, a personal computer may be applied, or a portable multifunctional terminal, such as a tablet terminal or an HMD, may be applied.

In addition, in the first embodiment, the image processing apparatus 10 and the user device 12 are connected in a communicable manner via, for example, a base station (not shown). The communication standards used in the base station include a wireless communication standard including a 5G standard and/or an LTE standard, a wireless communication standard including a WiFi (802.11) standard and/or a Bluetooth (registered trademark) standard, and a wired communication standard including a TDM standard and/or an Ethernet (registered trademark) standard.

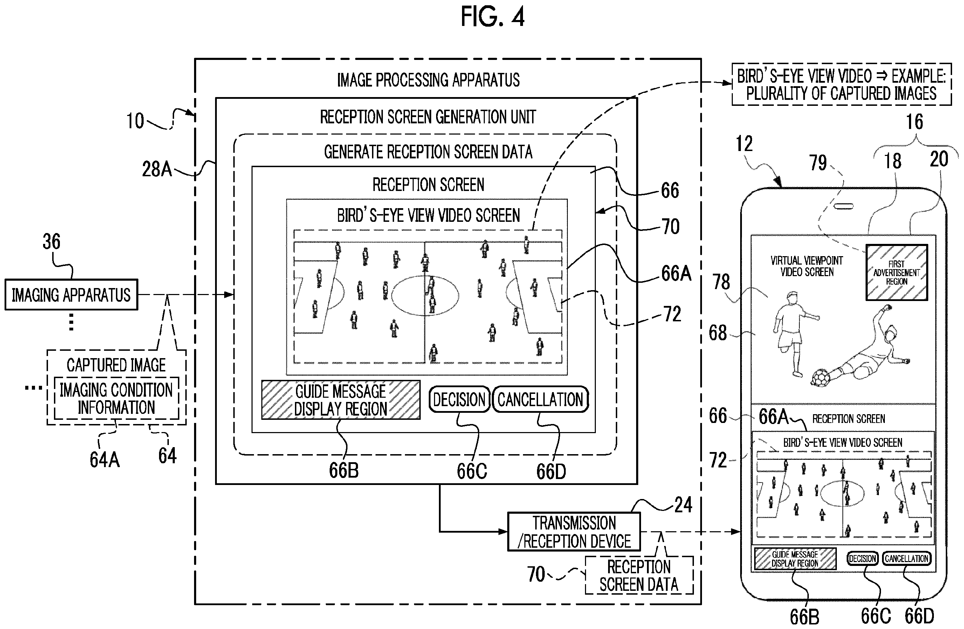

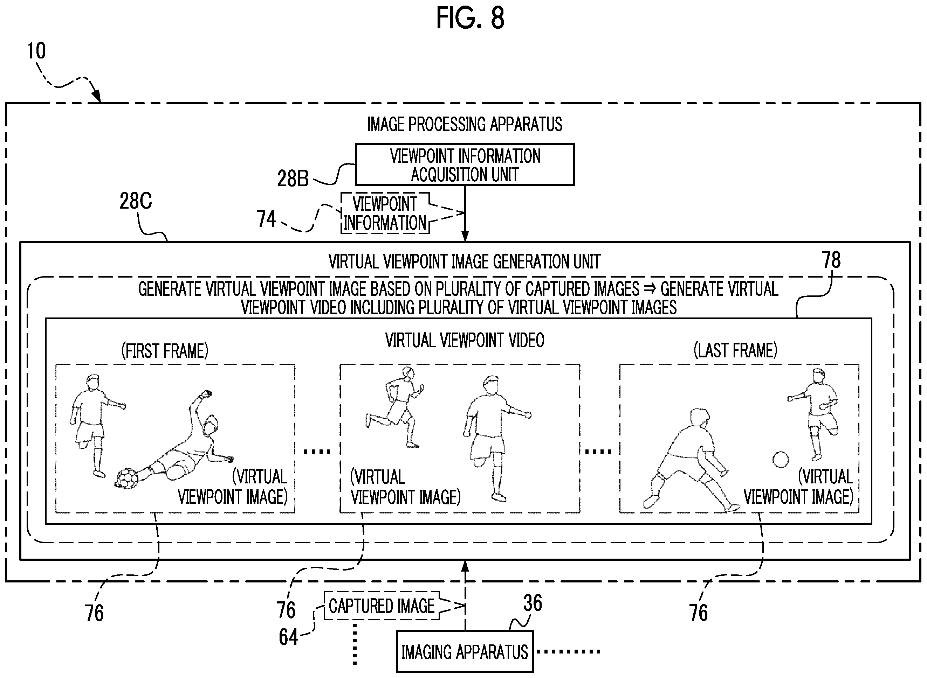

The image processing apparatus 10 acquires an image, and transmits the acquired image to the user device 12. Here, the image refers to, for example, a captured image 64 (see Fig. 4) obtained by being captured and an image generated based on the captured image 64 (see Fig. 4 and the like). Examples of the image generated based on the captured image (see Fig. 4) include a virtual viewpoint image 76 (see Fig. 8 and the like).

The user device 12 is used by a user 14. The user device 12 comprises a touch panel display 16. The touch panel display 16 is realized by a display 18 and a touch panel 20. Examples of the display 18 include an EL display (for example, an organic EL display or an inorganic EL display). It should be noted that the display is not limited to the EL display, and another type of display, such as a liquid crystal display, may be applied.

The touch panel display 16 is formed by superimposing the touch panel 20 on a display region of the display 18 or by forming an in-cell type in which a touch panel function is built in the display 18. It should be noted that the in-cell type is merely an example, and an out-cell type or an on-cell type may be applied.

The user device 12 executes processing according to an instruction received from the user by the touch panel 20 and the like. For example, the user device 12 exchanges various types of information with the image processing apparatus 10 in response to the instruction received from the user by the touch panel 20 and the like.

The user device 12 receives the image transmitted from the image processing apparatus 10, and displays the received image on the display 18. The user 14 views the image displayed on the display 18.

The image processing apparatus 10 comprises a computer 22, a transmission/reception device 24, and a communication I/F 26. The computer 22 is an example of a "computer" according to the technology of the present disclosure, and comprises a processor 28, a storage 30, and a RAM 32. The image processing apparatus 10 comprises a bus 34, and the processor 28, the storage 30, and the RAM 32 are connected via the bus 34. In the example shown in Fig. 1, one bus is shown as the bus 34 for convenience of illustration, but a plurality of buses may be used. In addition, the bus 34 may include a serial bus, or a parallel bus configured by a data bus, an address bus, a control bus, and the like.

The processor 28 is an example of a "processor" according to the technology of the present disclosure. The processor 28 controls the entire image processing apparatus 10. For example, the processor 28 includes a CPU and a GPU, and the GPU is operated under the control of the CPU, and is responsible for executing image processing.

Various parameters, various programs, and the like are stored in the storage 30. Examples of the storage 30 include an EEPROM, an SSD, and/or an HDD. The storage 30 is an example of a "memory" according to the technology of the present disclosure. Various types of information are transitorily stored in the RAM 32. The RAM 32 is used as a work memory by the processor 28.

The transmission/reception device 24 is connected to the bus 34. The transmission/reception device 24 is a device including a communication processor (not shown), an antenna, and the like, and transmits and receives various types of information to and from the user device 12 via the base station (not shown) under the control of the processor 28. That is, the processor 28 exchanges various types of information with the user device 12 via the transmission/reception device 24.

The communication I/F 26 is realized by a device including an FPGA, for example. The communication I/F 26 is connected to a plurality of imaging apparatuses 36 via a LAN cable (not shown). The imaging apparatus 36 is an imaging device including a CMOS image sensor, and has an optical zoom function and/or a digital zoom function. It should be noted that, instead of the CMOS image sensor, another type of image sensor, such as a CCD image sensor, may be adopted.

The plurality of imaging apparatuses 36 are installed, for example, in a soccer stadium (not shown) and image a subject inside the soccer stadium. The captured image 64 (see Fig. 4) obtained by imaging the subject by the imaging apparatus 36 is used, for example, for the generation of the virtual viewpoint image 76 (see Fig. 8 and the like). Therefore, the plurality of imaging apparatuses 36 are installed at different locations inside the soccer stadium, respectively, that is, at locations at which a plurality of captured images 64 (see Fig. 4) for generating virtual viewpoint images 76 (see Fig. 8 and the like) are obtained. Here, the plurality of captured images 64 are examples of a "plurality of captured images" according to the technology of the present disclosure.

The soccer stadium is a three-dimensional region including a soccer field and a spectator seat that is constructed to surround the soccer field, and is an observation target of the user 14. An observer, that is, the user 14, can observe the inside of the soccer stadium from the spectator seat or a place outside the soccer stadium through the image displayed by the display 18 of the user device 12.

It should be noted that, here, as an example, the soccer stadium is described as an example as the place in which the plurality of imaging apparatuses 36 are installed, but the technology of the present disclosure is not limited to this. The place in which the plurality of imaging apparatuses 36 are installed may be any place as long as the place is a place in which the plurality of imaging apparatuses 36 can be installed, such as a baseball field, a rugby field, a curling field, an athletic field, a swimming pool, a concert hall, an outdoor music field, and a theater.

The communication I/F 26 is connected to the bus 34, and controls the exchange of various types of information between the processor 28 and the plurality of imaging apparatuses 36. For example, the communication I/F 26 controls the plurality of imaging apparatuses 36 in response to a request from the processor 28. The communication I/F 26 outputs the captured image 64 (see Fig. 4) obtained by being captured by each of the plurality of imaging apparatuses 36 to the processor 28. It should be noted that, here, although the communication I/F 26 is described as a wired communication I/F, a wireless communication I/F, such as a highspeed wireless LAN, may be applied.

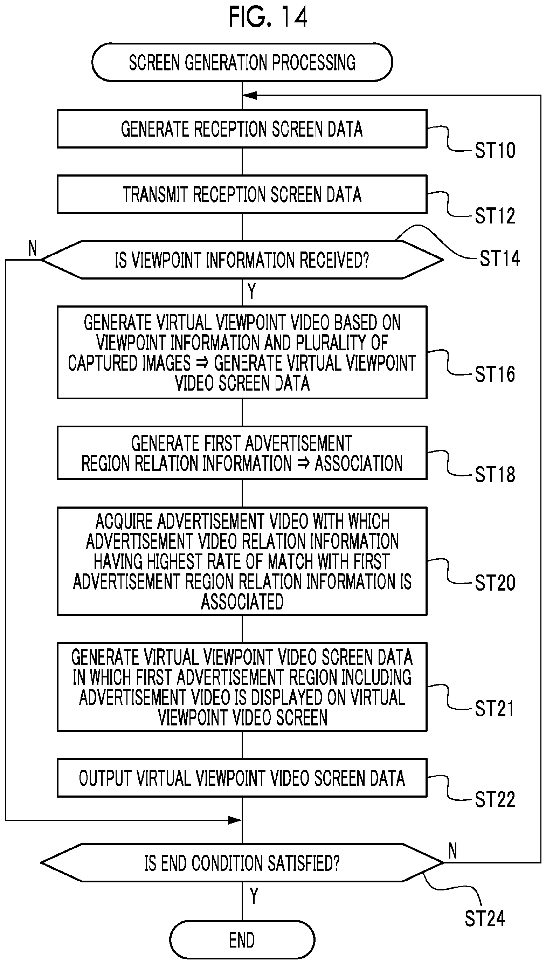

The storage 30 stores a screen generation processing program 38. The screen generation processing program 38 is an example of a "program" according to the technology of the present disclosure. The processor 28 performs screen generation processing (see Fig. 14) by reading out the screen generation processing program 38 from the storage 30 and executing the screen generation processing program 38 on the RAM 32.

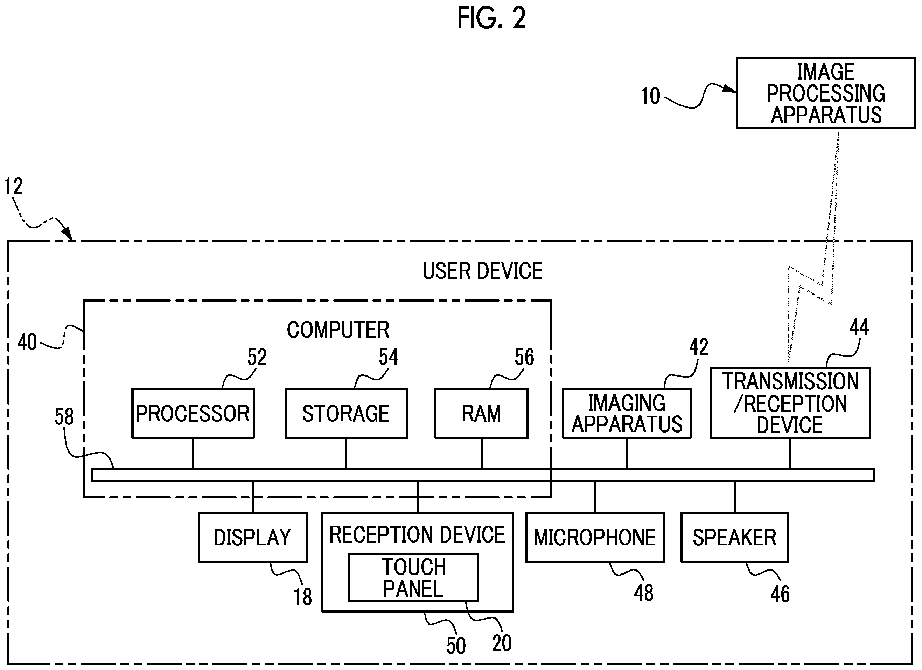

As shown in Fig. 2 as an example, the user device 12 comprises the display 18, a computer 40, an imaging apparatus 42, a transmission/reception device 44, a speaker 46, a microphone 48, and a reception device 50. The computer 40 comprises a processor 52, a storage 54, and a RAM 56. The user device 12 comprises a bus 58, and the processor 52, the storage 54, and the RAM 56 are connected via the bus 58.

In the example shown in Fig. 2, one bus is shown as the bus 58 for convenience of illustration, but a plurality of buses may be used. In addition, the bus 58 may include a serial bus or a parallel bus configured by a data bus, an address bus, a control bus, and the like.

The processor 52 controls the entire user device 12. The processor 52 includes, for example, a CPU and a GPU, and the GPU is operated under the control of the CPU, and is responsible for executing image processing.

Various parameters, various programs, and the like are stored in the storage 54. Examples of the storage 54 include an EEPROM. Various types of information are transitorily stored in the RAM 56. The RAM 56 is used as a work memory by the processor 52. The processor 52 performs processing according to the various programs by reading out various programs from the storage 54 and executing the various programs on the RAM 56.

The imaging apparatus 42 is an imaging device including a CMOS image sensor, and has an optical zoom function and/or a digital zoom function. It should be noted that, instead of the CMOS image sensor, another type of image sensor, such as a CCD image sensor, may be adopted. The imaging apparatus 42 is connected to the bus 58, and the processor 52 controls the imaging apparatus 42. The captured image obtained by the imaging with the imaging apparatus 42 is acquired by the processor 52 via the bus 58.

The transmission/reception device 44 is connected to the bus 58. The transmission/reception device 44 is a device including a communication processor (not shown), an antenna, and the like, and transmits and receives various types of information to and from the image processing apparatus 10 via the base station (not shown) under the control of the processor 52. That is, the processor 52 exchanges various types of information with the image processing apparatus 10 via the transmission/reception device 44.

The speaker 46 converts an electric signal into the sound. The speaker 46 is connected to the bus 58. The speaker 46 receives the electric signal output from the processor 52 via the bus 58, converts the received electric signal into the sound, and outputs the sound obtained by the conversion from the electric signal to the outside of the user device 12.

The microphone 48 converts the collected sound into the electric signal. The microphone 48 is connected to the bus 58. The processor 52 acquires the electric signal obtained by the conversion from the sound collected by the microphone 48 via the bus 58.

The reception device 50 receives an indication from the user 14 or the like. Examples of the reception device 50 include the touch panel 20 and a hard key (not shown). The reception device 50 is connected to the bus 58, and the indication received by the reception device 50 is acquired by the processor 52.

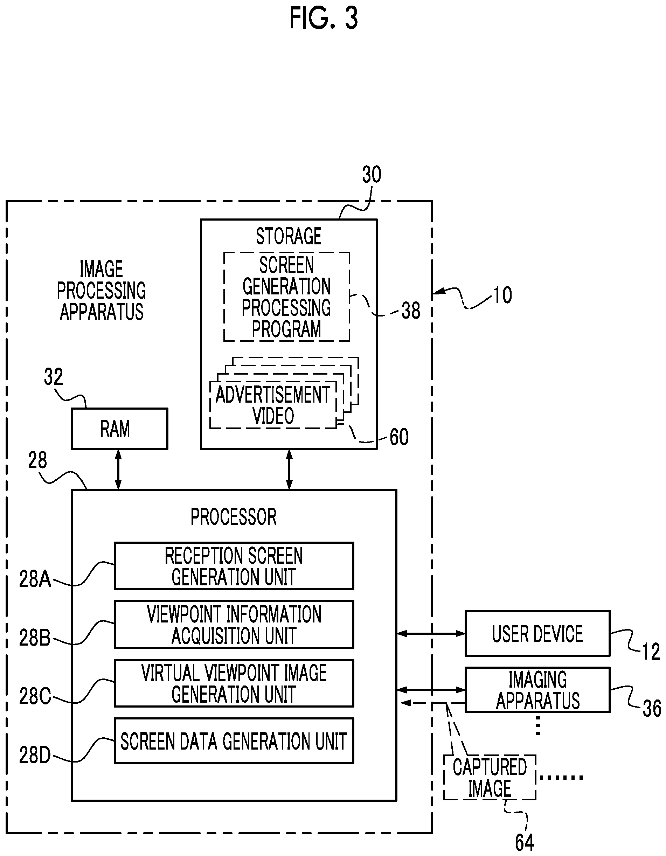

As an example, as shown in Fig. 3, in the image processing apparatus 10, by reading out the screen generation processing program 38 from the storage 30 and executing the screen generation processing program 38 on the RAM 32, the processor 28 is operated as a reception screen generation unit 28A, a viewpoint information acquisition unit 28B, a virtual viewpoint image generation unit 28C, and a screen data generation unit 28D.

The storage 30 stores a plurality of advertisement videos 60, which are used by the screen data generation unit 28D or the like. The advertisement video 60 is an example of an image that is not included in the plurality of captured images 64 obtained by being captured by the plurality of imaging apparatuses 36. In addition, the advertisement video 60 is an example of a video created in a process different from a process of a virtual viewpoint video 78 (see Figs. 4 and 8 to 10). In addition, the advertisement video 60 is an example of a video showing an advertisement (for example, a moving image obtained by imaging the subject in a real spatial domain by a camera, a virtual viewpoint video created in a process different from a process of the virtual viewpoint video 78, and/or an animation). The video showing the advertisement refers to, for example, a moving image in which the images of a plurality of frames created as an image for an advertisement are arranged in a time series. Examples of the advertisement video 60 include a video provided from a sponsor and the like who support the construction of the system (as shown in Fig. 1 as an example, the image processing system 2) for allowing the user 14 to view various videos including a virtual viewpoint video 78 (see Figs. 4 and 8 to 10).

Here, the moving image is described as an example of the advertisement video 60, but the technology of the present disclosure is not limited to this. The advertisement video 60 may be an image for the advertisement of a single-frame or an image used for a purpose other than the advertisement. The advertisement video 60 is merely an example, and a moving image or a still image of another type may be used. It should be noted that the advertisement video 60 is an example of a "specific image" and a "first specific image" according to the technology of the present disclosure.

As an example, as shown in Fig. 4, a reception screen 66 and a virtual viewpoint video screen 68 are displayed on the touch panel display 16 of the user device 12. In the example shown in Fig. 4, on the touch panel display 16, the reception screen 66 and the virtual viewpoint video screen 68 are displayed in an arranged manner. It should be noted that this is merely an example, and the reception screen 66 and the virtual viewpoint video screen 68 may be switched and displayed in response to the indication given to the touch panel display 16 by the user 14, or the reception screen 66 and the virtual viewpoint video screen 68 may be individually displayed by different display devices.

In addition, in the example shown in Fig. 4, the reception screen 66 is displayed on the touch panel display 16 of the user device 12, but the technology of the present disclosure is not limited to this, and for example, the reception screen 66 may be displayed on a display connected to a device (for example, a workstation and/or a personal computer) used by a person who creates or edits a virtual viewpoint video 78 (see Fig. 8).

The user device 12 acquires the virtual viewpoint video 78 (see also Fig. 8) from the image processing apparatus 10 by performing communication with the image processing apparatus 10. The virtual viewpoint video 78 (see also Fig. 8) acquired from the image processing apparatus 10 by the user device 12 is displayed on the virtual viewpoint video screen 68 of the touch panel display 16. It should be noted that the virtual viewpoint video 78 is an example of a "virtual viewpoint image" according to the technology of the present disclosure. It should be noted that, in the first embodiment, the virtual viewpoint video 78 is described as the moving image, but the technology of the present disclosure is established even for the virtual viewpoint image 76 which is a still image.

The virtual viewpoint video screen 68 has a first advertisement region 79. That is, the first advertisement region 79 is displayed in the virtual viewpoint video 78. The first advertisement region 79 is an example of a "first region" according to the technology of the present disclosure.

In the example shown in Fig. 4, the first advertisement region 79 has a rectangular shape, and is displayed in the upper right portion of the front view of the virtual viewpoint video screen 68. It should be noted that a shape, a size, and a display position of the first advertisement region 79 shown in Fig. 4 are merely an example, and may have a shape, a size, and a display position which are different from those in the example shown in Fig. 4. Although details will be described below, the advertisement video 60 (see Figs. 3 and 11 to 13) is displayed in the first advertisement region 79.

The first advertisement region 79 is a region related to the virtual viewpoint video 78. Here, the concept of the region related to the virtual viewpoint video 78 includes the concept of a region displayed in the virtual viewpoint video 78, a region in which an image (for example, a bird's-eye view video 72) related to the virtual viewpoint video 78 is displayed, a region displayed before the virtual viewpoint video 78 is displayed, a region displayed at a display timing (for example, a timing decided according to a content of the virtual viewpoint video 78, a timing decided based on a timing at which the display of the virtual viewpoint video 78 is started, or a timing decided based on a timing at which the display of the virtual viewpoint video 78 ends) of the virtual viewpoint video 78, and the like.

The first advertisement region 79 is displayed to be superimposed on the virtual viewpoint video 78. In the first embodiment, the first advertisement region 79 is displayed to be simply superimposed on the virtual viewpoint video 78. It should be noted that this is merely example. Examples of the method of displaying the first advertisement region 79 to be superimposed on the virtual viewpoint video 78 include alpha blending. In this case, an alpha value may be changed. The magnitude of the alpha value and/or a change timing of the alpha value may be decided according to various types of information (for example, the content of the virtual viewpoint video 78, the timing at which the display of the virtual viewpoint video 78 is started, and/or the timing at which the display of the virtual viewpoint video 78 ends) related to the virtual viewpoint video 78, and the like.

Here, the form example is described in which the first advertisement region 79 is displayed to be superimposed on the virtual viewpoint video 78, but this is merely an example, and the first advertisement region 79 may be displayed to be embedded in the virtual viewpoint video 78.

The user device 12 performs communication with the image processing apparatus 10 to acquire reception screen data 70 indicating the reception screen 66 from the image processing apparatus 10. The reception screen 66 indicated by the reception screen data 70 acquired from the image processing apparatus 10 by the user device 12 is displayed on the touch panel display 16.

The reception screen 66 includes a bird's-eye view video screen 66A, a guide message display region 66B, a decision key 66C, and a cancellation key 66D, and various types of information required for the generation of the virtual viewpoint video 78 is displayed on the reception screen 66. The user 14 gives an indication to the user device 12 with reference to the reception screen 66. The indication from the user 14 is received by the touch panel display 16, for example.

A bird's-eye view video 72 is displayed on the bird's-eye view video screen 66A. The bird's-eye view video 72 is a moving image showing an aspect in a case in which the inside of the soccer stadium is observed from a bird's-eye view, and is generated based on the plurality of captured images 64 obtained by being captured by at least one of the plurality of imaging apparatuses 36. Examples of the bird's-eye view video 72 include a recorded video and/or a live coverage video.

Various messages indicating contents of an operation requested to the user 14 are displayed in the guide message display region 66B. The operation requested to the user 14 refers to, for example, an operation required for the generation of the virtual viewpoint video 78 (for example, an operation of setting the viewpoint, an operation of setting the gaze point, and the like).

Display contents of the guide message display region 66B is switched according to an operation mode of the user device 12. For example, the user device 12 has, as the operation mode, a viewpoint setting mode in which the viewpoint is set and a gaze point setting mode in which the gaze point is set, and the display contents of the guide message display region 66B are different between the viewpoint setting mode and the gaze point setting mode.

Both the decision key 66C and the cancellation key 66D are soft keys. The decision key 66C is turned on by the user 14 in a case in which the indication received by the reception screen 66 is decided. The cancellation key 66D is turned on by the user 14 in a case in which the indication received by the reception screen 66 is cancelled.

The reception screen generation unit 28A acquires the plurality of captured images 64 from the plurality of imaging apparatuses 36. The captured image 64 includes imaging condition information 64A. The imaging condition information 64A refers to information indicating an imaging condition. Examples of the imaging condition include three-dimensional coordinates for specifying the installation position of the imaging apparatus 36, an imaging direction by the imaging apparatus 36, an angle of view used in the imaging by the imaging apparatus 36, and a zoom magnification applied to the imaging apparatus 36.

The reception screen generation unit 28A generates the bird's-eye view video 72 based on the plurality of captured images 64 acquired from the plurality of imaging apparatuses 36. Then, the reception screen generation unit 28A generates data indicating the reception screen 66 including the bird's-eye view video 72, as the reception screen data 70.

The reception screen generation unit 28A outputs the reception screen data 70 to the transmission/reception device 24. The transmission/reception device 24 transmits the reception screen data 70 input from the reception screen generation unit 28A to the user device 12. The user device 12 receives the reception screen data 70 transmitted from the transmission/reception device 24 by the transmission/reception device 44 (see Fig. 3). The reception screen 66 indicated by the reception screen data 70 received by the transmission/reception device 44 is displayed on the touch panel display 16.

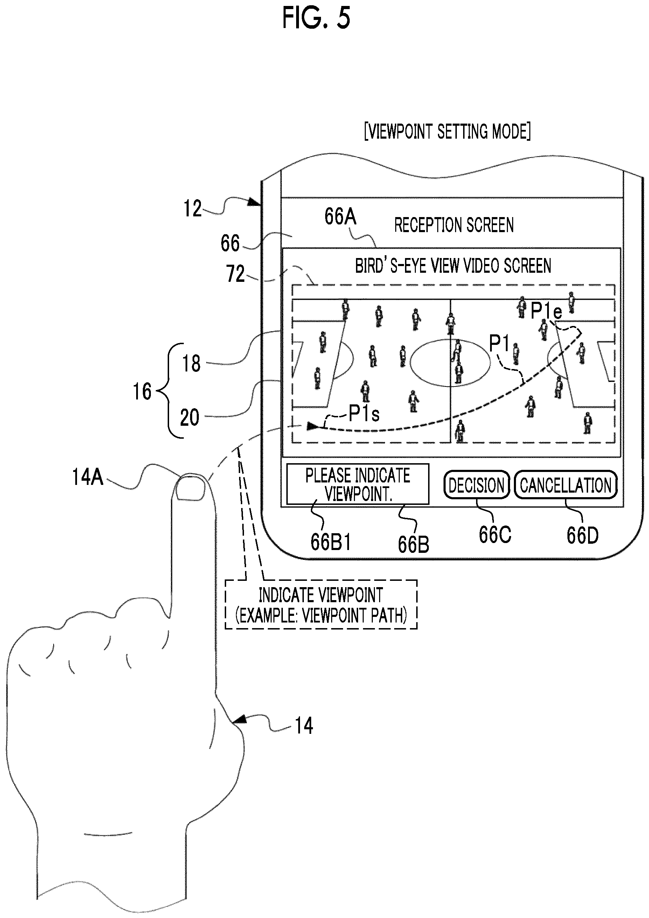

As shown in Fig. 5 as an example, in a case in which the operation mode of the user device 12 is the viewpoint setting mode, a message 66B 1 is displayed in the guide message display region 66B of the reception screen 66. The message 66B1 is a message prompting the user 14 to indicate the viewpoint used for the generation of the virtual viewpoint video 78 (see Figs. 4 and 8). Here, the viewpoint refers to a virtual viewpoint for observing the inside of the soccer stadium. For example, the virtual viewpoint does not refer to a position at which an actually existing camera, such as a physical camera that images the subject (for example, the imaging apparatus 36), is installed, but refers to a position at which a virtual camera that images the subject is installed.

The touch panel display 16 receives an indication from the user 14 in a state in which the message 66B1 is displayed in the guide message display region 66B. In this case, the indication from the user 14 refers to an indication of the viewpoint. The viewpoint corresponds to a position of a pixel in the bird's-eye view video 72. The position of the pixel in the bird's-eye view video 72 corresponds to the position inside the soccer stadium. The indication of the viewpoint is performed by the indication of the position of the pixel in the bird's-eye view video 72 by the user 14 via the touch panel display 16. It should be noted that the viewpoint may have three-dimensional coordinates corresponding to a three-dimensional position in the bird's-eye view video 72. Any method can be used as a method of indicating the three-dimensional position. For example, the user 14 may directly input a three-dimensional coordinate position, or may designate the three-dimensional coordinate position by displaying two images showing the soccer stadium seen from two planes perpendicular to each other and designating each pixel position.

In the example shown in Fig. 5, a viewpoint path P1, which is a path for observing the subject, is shown as an example of the viewpoint. The viewpoint path P1 is an aggregation in which a plurality of viewpoints are linearly arranged from a starting point P1s to an end point P1e. The viewpoint path P1 is defined along a route (in the example shown in Fig. 5, a meandering route from the starting point P1s to the end point P1e) in which the user 14 slides (swipes) his/her fingertip 14A on a region corresponding to a display region of the bird's-eye view video 72 in the entire region of the touch panel 20. In addition, an observation time from the viewpoint path P1 (for example, a time of observation between two different viewpoints and/or a time of observation at a certain point in a stationary state) is defined by a speed of the slide performed with respect to the touch panel display 16 in a case in which the viewpoint path P1 is formed via the touch panel display 16, a time (for example, a long press time) to stay at one viewpoint on the viewpoint path P1, and the like.

In the example shown in Fig. 5, the decision key 66C is turned on in a case in which the viewpoint path P1 is settled, and the cancellation key 66D is turned on in a case in which the viewpoint path P1 is cancelled.

It should be noted that, in the example shown in Fig. 5, only the viewpoint path P1 is set, but this is merely an example, and a plurality of viewpoint paths may be set. In addition, the technology of the present disclosure is not limited to the viewpoint path, and a plurality of discontinuous viewpoints may be used, or one viewpoint may be used.

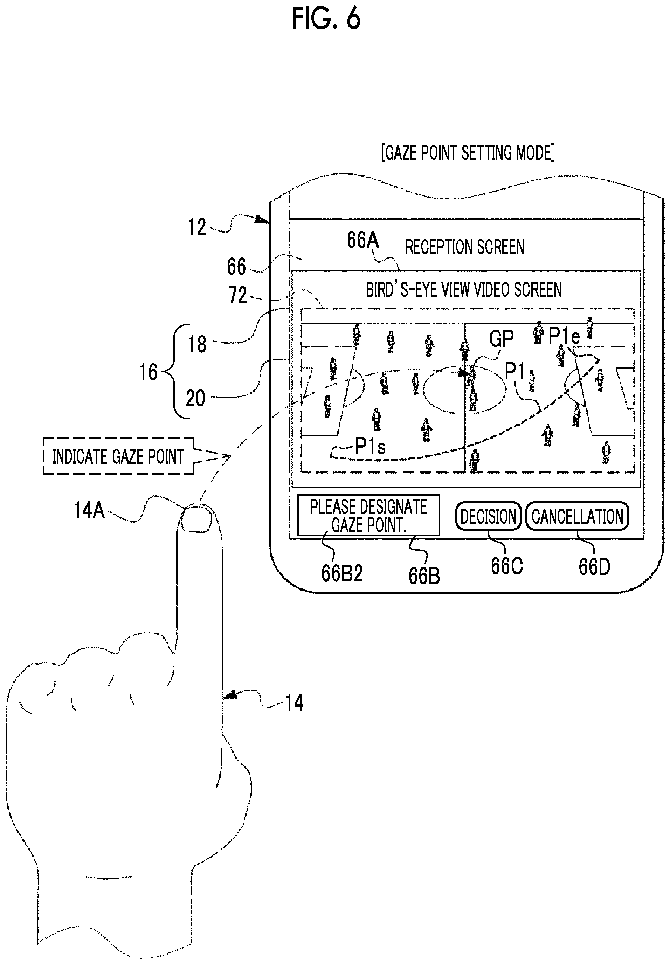

As shown in Fig. 6 as an example, in a case in which the operation mode of the user device 12 is the gaze point setting mode, a message 66B2 is displayed in the guide message display region 66B of the reception screen 66. The message 66B2 is a message prompting the user 14 to indicate the gaze point used for the generation of the virtual viewpoint video 78 (see Fig. 8). Here, the gaze point refers to a point that is virtually gazed in a case in which the inside of the soccer stadium is observed from the viewpoint. In a case in which the viewpoint and the gaze point are set, a virtual visual line direction (imaging direction of the virtual camera) is also uniquely decided. The virtual visual line direction refers to a direction from the viewpoint to the gaze point.

The touch panel display 16 receives an indication from the user 14 in a state in which the message 66B2 is displayed in the guide message display region 66B. In this case, the indication from the user 14 refers to an indication of the gaze point. The gaze point corresponds to a position of a pixel in the bird's-eye view video 72. The position of the pixel in the bird's-eye view video 72 corresponds to the position inside the soccer stadium. The indication of the gaze point is performed by the user 14 indicating the position of the pixel in the bird's-eye view video 72 via the touch panel display 16. In the example shown in Fig. 6, a gaze point GP is shown. The gaze point GP is defined according to a location in which the user 14 touches his/her fingertip 14A on the region corresponding to the display region of the bird's-eye view video 72 in the entire region of the touch panel display 16. In the example shown in Fig. 6, the decision key 66C is turned on in a case in which the gaze point GP is settled, and the cancellation key 66D is turned on in a case in which the gaze point GP is cancelled. It should be noted that the gaze point may have three-dimensional coordinates corresponding to a three-dimensional position in the bird's-eye view video 72. Any method can be used as a method of indicating the three-dimensional position, as in the indication of the viewpoint position.

It should be noted that, in the example shown in Fig. 6, only the gaze point GP is designated, but this is merely an example, and a plurality of gaze points may be used, or a path (gaze point path) in which a plurality of gaze points are linearly arranged may be used. One or a plurality of gaze point paths may be used.

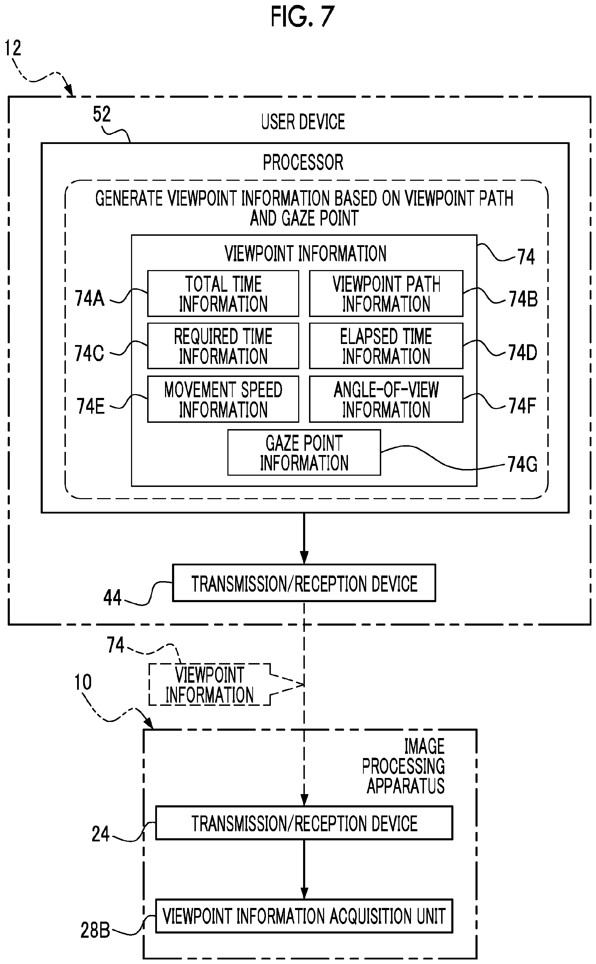

As an example, as shown in Fig. 7, the processor 52 of the user device 12 generates viewpoint information 74 based on the viewpoint path P1 and the gaze point GP. The viewpoint information 74 is an example of "first viewpoint information" and "second viewpoint information" according to the technology of the present disclosure.

The viewpoint information 74 is information used for the generation of the virtual viewpoint video 78 (see Fig. 8). The viewpoint information 74 includes total time information 74A, viewpoint path information 74B, required time information 74C, elapsed time information 74D, movement speed information 74E, angle-of-view information 74F, and gaze point information 74G.

The total time information 74A is information indicating a total time (hereinafter, also simply referred to as a "total time" or a "display time") in which the virtual viewpoint video 78 (see Fig. 8) generated based on one or more viewpoint paths (for example, only the viewpoint path P1 or the plurality of viewpoint paths including the viewpoint path P1) settled in the viewpoint setting mode is played back at a standard playback speed. The total time corresponds to a time in which the fingertip 14A is slid on the touch panel display 16 to create the plurality of viewpoint paths.

The viewpoint path information 74B is information indicating the viewpoint path P1 (see Fig. 5) settled in the viewpoint setting mode (for example, coordinates for specifying a position of a pixel of the viewpoint path P1 in the bird's-eye view video 72). The viewpoint path information 74B is information for specifying a position of the viewpoint (hereinafter, also referred to as a "viewpoint position"). The viewpoint position refers to, for example, a position of the virtual camera described above. Here, as an example of the viewpoint position, a position of a pixel in the bird's-eye view video 72 of one viewpoint included in the viewpoint path P1 settled in the viewpoint setting mode is applied. Examples of the information for specifying the position of the pixel in the bird's-eye view video 72 of the viewpoint path P1 include coordinates for specifying a position of a pixel of the viewpoint path P1 in the bird's-eye view video 72.

The viewpoint path P1 includes the starting point P1s and the end point P1e (see Fig. 5). Therefore, a plurality of pieces of viewpoint position information indicating the positions of all the viewpoint positions included in the viewpoint path P1 also includes starting point positional information (hereinafter, also simply referred to as a "starting point positional information") for specifying a position of the starting point P1s and end point positional information (hereinafter, also simply referred to as an "end point positional information") for specifying a position of the end point P1e. Examples of the starting point positional information include coordinates for specifying a position of a pixel of the starting point P1s in the bird's-eye view video 72. Examples of the end point positional information include coordinates for specifying a position of a pixel of the end point P1e in the bird's-eye view video 72.

The required time information 74C is information indicating a required time (hereinafter, also simply referred to as a "required time"), which is required for a viewpoint for observing the subject on the viewpoint path P1 to move from a first position to a second position different from the first position. Here, the first position refers to the starting point P1s (see Fig. 5 and Fig. 6), and the second position refers to, for example, the end point P1e (see Fig. 5 and Fig. 6). It should be noted that this is merely an example, and the first position may be the starting point P1s (see Fig. 5 and Fig. 6) and the second position may be a position of the intermediate viewpoint on the viewpoint path P1, or the first position may be a position of the intermediate viewpoint in the viewpoint path P1 and the second position may be the end point P1e (see Fig. 5 and Fig. 6).

The elapsed time information 74D is information indicating a position of the viewpoint for observing the subject on the viewpoint path P1 and the elapsed time corresponding to the position of the viewpoint. The elapsed time corresponding to the position of the viewpoint (hereinafter, also simply referred to as an "elapsed time") refers to, for example, a time in which the viewpoint is stationary at a position of a certain viewpoint on the viewpoint path P1.

The movement speed information 74E is information for specifying a movement speed of the position of the viewpoint for observing the subject on the viewpoint path P1, that is, a speed at which the viewpoint is moved on the viewpoint path P1. The movement speed of the position of the viewpoint (hereinafter, also simply referred to as a "movement speed") refers to, for example, the speed of the slide performed on the touch panel display 16 in a case in which the viewpoint path P1 is formed via the touch panel display 16. The movement speed information 74E is associated with each viewpoint in the viewpoint path P1.

The angle-of-view information 74F is information indicating an angle of view (hereinafter, also simply referred to as an "angle of view"). Here, the angle of view refers to an angle of view for observing the subject on the viewpoint path P1. In the first embodiment, the angle of view is fixed to a predetermined angle (for example, 100 degrees). It should be noted that this is merely an example, and the angle of view may be decided according to the movement speed.

In a case in which the angle of view is decided according to the movement speed, for example, within a range in which an upper limit (for example, 150 degrees) and a lower limit (for example, 15 degrees) of the angle of view are decided, the angle of view is narrower as the movement speed is lower. In addition, the angle of view may be narrower as the movement speed is higher.

In addition, the angle of view may be decided according to the elapsed time. In a case in which the angle of view is decided according to the elapsed time, for example, the angle of view need only be minimized in a case in which the elapsed time exceeds a first predetermined time (for example, 3 seconds), or the angle of view need only be maximized in a case in which the elapsed time exceeds the first predetermined time.

In addition, the angle of view may be decided according to the indication received by the reception device 50. In this case, the reception device 50 need only receive the indications regarding the viewpoint position at which the angle of view is changed and the changed angle of view on the viewpoint path P1.

The gaze point information 74G is information for specifying a position of the gaze point GP settled in the gaze point setting mode (for example, coordinates for specifying a position of a pixel of the gaze point GP in the bird's-eye view video 72).

The processor 52 outputs the viewpoint information 74 to the transmission/reception device 44. The transmission/reception device 44 transmits the viewpoint information 74 input from the processor 52 to the image processing apparatus 10. The transmission/reception device 24 of the image processing apparatus 10 receives the viewpoint information 74. The viewpoint information acquisition unit 28B of the image processing apparatus 10 acquires the viewpoint information 74 received by the transmission/reception device 24.

The processor 52 outputs the viewpoint information 74 to the transmission/reception device 44. The transmission/reception device 44 transmits the viewpoint information 74 input from the processor 52 to the image processing apparatus 10. The transmission/reception device 24 of the image processing apparatus 10 receives the viewpoint information 74 transmitted from the image processing apparatus 10. The viewpoint information acquisition unit 28B of the image processing apparatus 10 acquires the viewpoint information 74 received by the transmission/reception device 24.

As shown in Fig. 8 as an example, the virtual viewpoint image generation unit 28C generates the virtual viewpoint image 76, which is an image showing an aspect of the subject in a case in which the subject is observed from the viewpoint specified by the viewpoint information 74, based on the plurality of captured images 64 and the viewpoint information 74. For example, the virtual viewpoint image generation unit 28C acquires the plurality of captured images 64 from the plurality of imaging apparatuses 36 according to the viewpoint information 74, and generates the virtual viewpoint image 76 for each viewpoint on the viewpoint path P1 based on the acquired plurality of captured images 64. That is, the virtual viewpoint image generation unit 28C generates the virtual viewpoint images 76 of a plurality of frames according to the viewpoint path P1. The virtual viewpoint images 76 of the plurality of frames generated according to the viewpoint path P1 refers to the virtual viewpoint image 76 generated for each viewpoint on the viewpoint path P1. The virtual viewpoint image generation unit 28C generates the virtual viewpoint video 78 by arranging the virtual viewpoint images 76 of the plurality of frames in a time series. It should be noted that, even in a case in which the viewpoint path is present in addition to the viewpoint path P1, the virtual viewpoint image generation unit 28C generates the virtual viewpoint images 76 of the plurality of frames as in the viewpoint path P1, and generates the virtual viewpoint video 78 by arranging the generated virtual viewpoint images 76 of the plurality of frames in a time series.

The virtual viewpoint video 78 is a moving image in which the virtual viewpoint images 76 of the plurality of frames are arranged in a time series. A person who views the virtual viewpoint video 78 is the user 14, for example. The virtual viewpoint video 78 is viewed by the user 14 via the display 18 of the user device 12. For example, the virtual viewpoint images 76 of the plurality of frames are viewed by the user 14 as the virtual viewpoint video 78 by being displayed on the virtual viewpoint video screen 68 (see Fig. 4) of the display 18 of the user device 12 at a predetermined frame rate (for example, several tens of frames/second) from the first frame to the last frame.

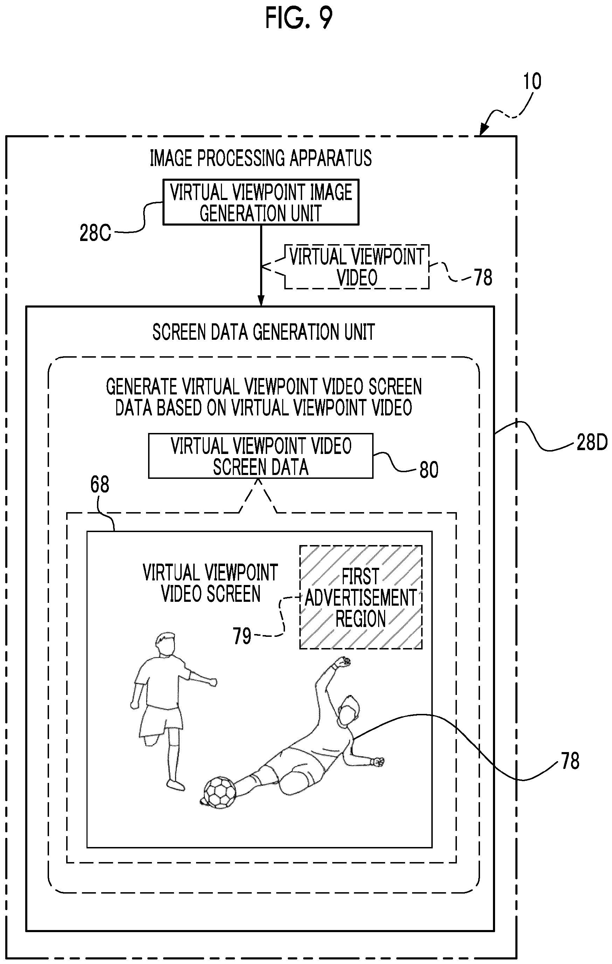

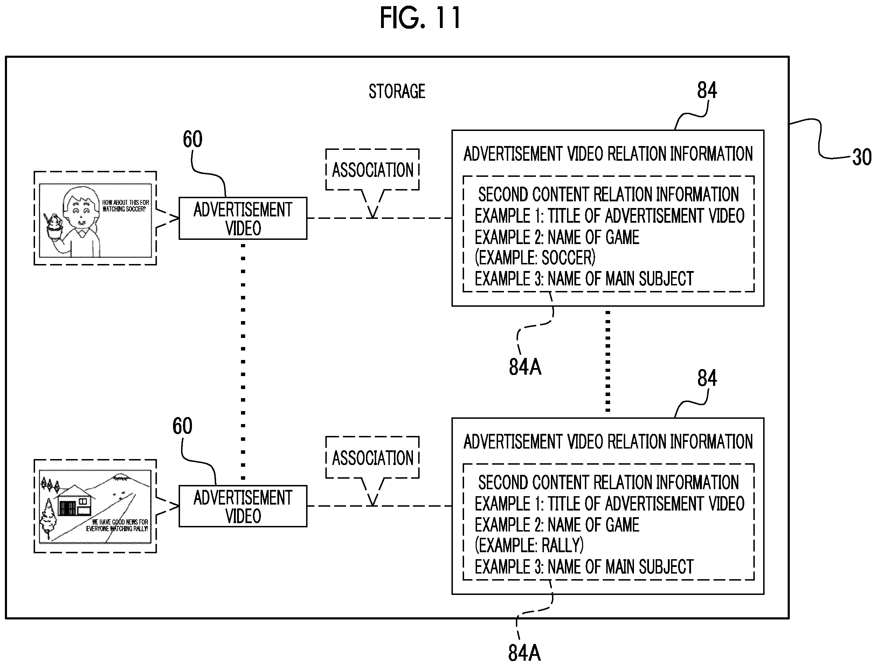

As shown in Fig. 9 as an example, the screen data generation unit 28D generates virtual viewpoint video screen data 80 based on the virtual viewpoint video 78 generated by the virtual viewpoint image generation unit 28C. The details will be described below, but the screen data generation unit 28D selects the advertisement video 60 from among the plurality of advertisement videos 60 (see Figs. 3 and 11). The virtual viewpoint video screen data 80 is data (for example, data indicating the virtual viewpoint video screen 68) for displaying the advertisement video 60 selected from among the plurality of advertisement videos 60 (see Figs. 3 and 11) by the screen data generation unit 28D in the first advertisement region 79. In the first embodiment, the virtual viewpoint video screen data 80 is an example of "first data" according to the technology of the present disclosure.

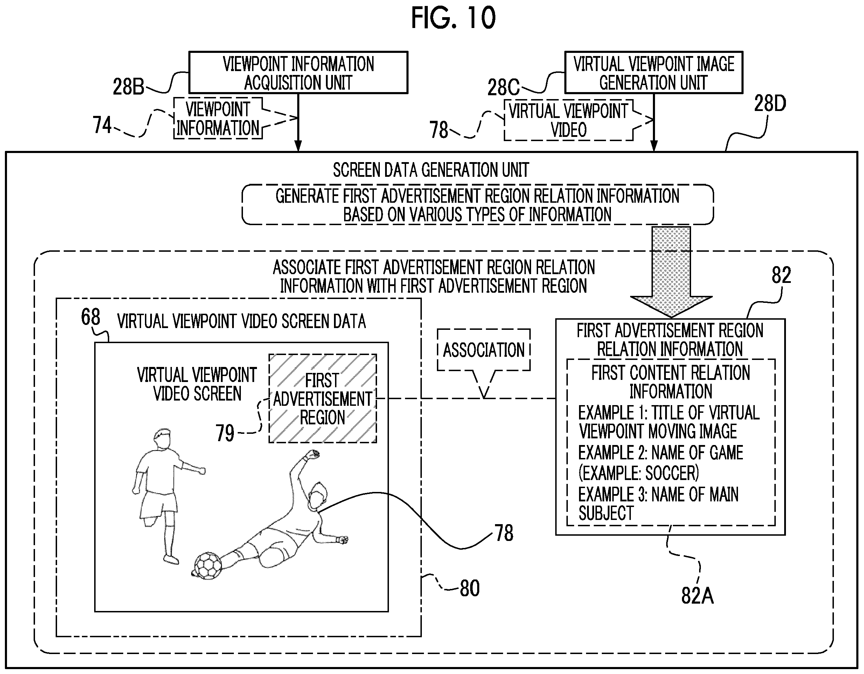

As shown in Fig. 10 as an example, the screen data generation unit 28D generates first advertisement region relation information 82 based on various types of information. The first advertisement region relation information 82 is information associated with the first advertisement region 79. Examples of various types of information used for the generation of the first advertisement region relation information 82 include the virtual viewpoint video 78 generated by the virtual viewpoint image generation unit 28C, the viewpoint information 74 acquired by the viewpoint information acquisition unit 28B (for example, the viewpoint information 74 used for the generation of the virtual viewpoint video 78 by the virtual viewpoint image generation unit 28C shown in Fig. 8), and/or information according to an indication received by the reception device 50 or the like. It should be noted that the first advertisement region relation information 82 is an example of "first information" and "region relation information" according to the technology of the present disclosure.

The first advertisement region relation information 82 includes first content relation information 82A. The first content relation information 82A is information related to the content of the virtual viewpoint video 78.

A first example of the first content relation information 82A is a title of the virtual viewpoint video 78. The title of the virtual viewpoint video 78 may be, for example, a title decided according to an indication received by the reception device 50 or the like, or may be a title decided based on the virtual viewpoint video 78. The title decided based on the virtual viewpoint video 78 is generated, for example, by performing subject recognition processing of an AI method. In this case, for example, the screen data generation unit 28D specifies a type of the subject included in the virtual viewpoint video 78 by performing the subject recognition processing of the AI method on the virtual viewpoint video 78. Then, the screen data generation unit 28D derives the title suitable for the type of the subject included in the virtual viewpoint video 78. The title suitable for the type of the subject is derived from, for example, a title derivation table (not shown) in which the type of the subject is used as input and the title is used as output. The title derivation table may be a table in which information, such as the viewpoint information 74, is used as input in addition to the type of the subject and the title is used as output.

A second example of the first content relation information 82A is a name of a game watched by the user 14 through the virtual viewpoint video 78 and/or the bird's-eye view video 72. The name of the game may be, for example, a name of the game decided according to an indication received by the reception device 50 or the like, or may be a name of the game decided based on the virtual viewpoint video 78. The name of the game decided based on the virtual viewpoint video 78 is generated, for example, by performing the subject recognition processing of the AI method. In this case, for example, the screen data generation unit 28D specifies the type of the subject included in the virtual viewpoint video 78 by performing the subject recognition processing of the AI method on the virtual viewpoint video 78. Then, the screen data generation unit 28D derives the name of the game suitable for the type of the subject included in the virtual viewpoint video 78. The name of the game suitable for the type of the subject is derived from, for example, a game name derivation table (not shown) in which the type of the subject is used as input and the name of the game is used as output.

A third example of the first content relation information 82A is a name of a main subject seen by the user 14 through the virtual viewpoint video 78 and/or the bird's-eye view video 72 (for example, a subject that is most frequently imaged in the virtual viewpoint video 78, a subject that is imaged for the longest time in the virtual viewpoint video 78, and/or a subject that is imaged in a size larger than a predetermined size and in a frame equal to or more than a predetermined number of frames in the virtual viewpoint video 78). The name of the main subject may be, for example, a name decided according to an indication received by the reception device 50 or the like, or may be a name decided based on the virtual viewpoint video 78. The name decided based on the virtual viewpoint video 78 is generated, for example, by performing the subject recognition processing of the AI method. In this case, for example, the screen data generation unit 28D specifies the type of the subject included in the virtual viewpoint video 78 by performing the subject recognition processing of the AI method on the virtual viewpoint video 78. Then, the screen data generation unit 28D derives the name suitable for the type of the subject included in the virtual viewpoint video 78. The name suitable for the type of the subject is derived from, for example, a name derivation table (not shown) in which the type of the subject is used as input and the name of the subject is used as output.

It should be noted that, although the subject recognition processing of the AI method is described as an example here, this is merely an example, and other subject recognition processing, such as subject recognition processing of a template matching method, may be used.

In this way, in a case in which the type of the subject is specified by performing the subject recognition processing with respect to the virtual viewpoint video 78 and the first content relation information 82A is decided according to the specified type of the subject, the type of the subject specified by the screen data generation unit 28D is changed according to the viewpoint information 74 required for the generation of the virtual viewpoint video 78, so that the first content relation information 82A is also changed accordingly. For example, the first content relation information 82A is changed by the screen data generation unit 28D according to at least one of the total time information 74A, the viewpoint path information 74B, the required time information 74C, the elapsed time information 74D, the movement speed information 74E, the angle-of-view information 74F, and the gaze point information 74G included in the viewpoint information 74.

The screen data generation unit 28D associates the generated first advertisement region relation information 82 with the first advertisement region 79. It should be noted that the information in which the first advertisement region 79 and the first advertisement region relation information 82 are associated with each other may be stored in a storage device, such as the storage 30, together with the virtual viewpoint video 78 or separately from the virtual viewpoint video 78.

As shown in Fig. 11 as an example, a plurality of pieces of advertisement video relation information 84 are stored in the storage 30. The advertisement video relation information 84 is information related to the advertisement video 60, and is individually associated with each of the plurality of advertisement videos 60. In the first embodiment, for example, the contents of the advertisement video relation information 84 are different between the pieces of advertisement video relation information 84 associated with each advertisement video 60. It should be noted that the plurality of pieces of advertisement video relation information 84 is an example of "specific image relation information" according to the technology of the present disclosure.

The advertisement video relation information 84 includes second content relation information 84A. The second content relation information 84A is information related to the content of the advertisement video 60. The second content relation information 84A is an example of "second content relation information" according to the technology of the present disclosure.

The concept of the content of the advertisement video 60 is not limited to the content itself of the advertisement video 60, but also includes the concept of a subject (for example, the user 14) for which the advertisement video 60 is shown, and/or an attribute of the advertisement video 60 (for example, a product field to which the advertisement indicated by the advertisement video 60 belongs, a target age group of the advertisement indicated by the advertisement video 60, and/or an age group in which it is safer not to show the advertisement indicated by the advertisement video 60 ethically).

A first example of the second content relation information 84A is a title of the advertisement video 60. The title of the advertisement video 60 is decided, for example, on a producer side of the advertisement video 60. It should be noted that this decision method is merely an example, and as another decision method, for example, there is a decision method of specifying the type of the subject included in the advertisement video 60 by the subject recognition processing or the like described above, and deriving the title suitable for the specified type of the subject by using the title derivation table described above or the like.

A second example of the second content relation information 84A is the name of the game watched by the user 14 through the virtual viewpoint video 78 and/or the bird's-eye view video 72. For example, it is decided on the producer side of the advertisement video 60. It should be noted that this decision method is merely an example, and as another decision method, for example, there is a decision method of specifying the type of the subject included in the advertisement video 60 by the subject recognition processing or the like described above, and deriving the name of the game suitable for the specified type of the subject by using the game name derivation table described above or the like.

A third example of the second content relation information 84A is the name of the main subject seen by the user 14 through the virtual viewpoint video 78 and/or the bird's-eye view video 72. The name of the main subject is decided, for example, on the producer side of the advertisement video 60. It should be noted that this decision method is merely an example, and as another decision method, for example, there is a decision method of specifying the type of the subject included in the advertisement video 60 by the subject recognition processing or the like described above, and deriving the name of the main subject suitable for the specified type of the subject by using the main subject name derivation table described above or the like.

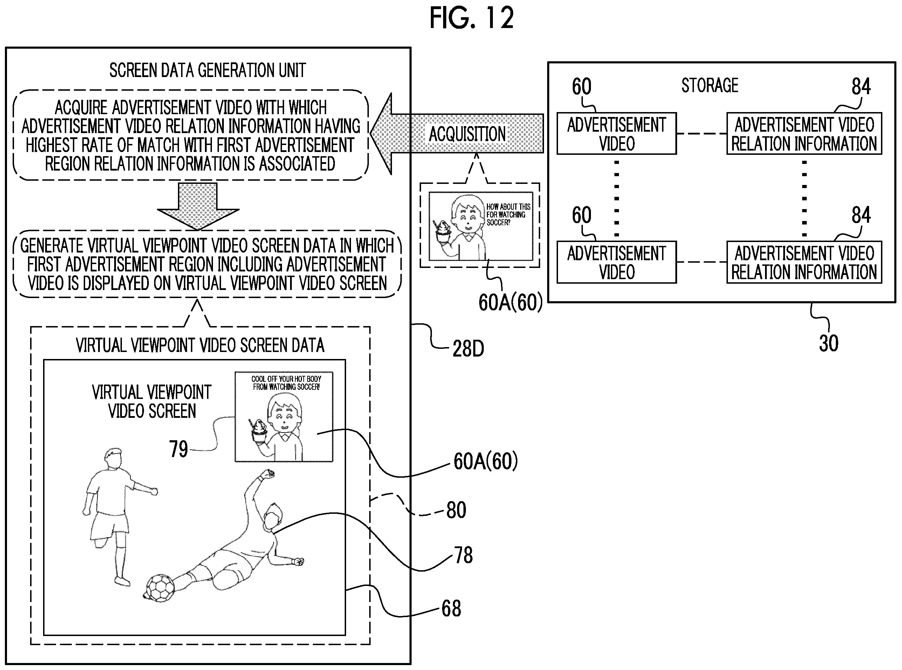

In the image processing apparatus 10, the screen data generation unit 28D selects one advertisement video 60 to be displayed in the first advertisement region 79 (see Figs. 4, 9, and 10) from among the plurality of advertisement videos 60 based on the first advertisement region relation information 82 (see Fig. 10) and the advertisement video relation information 84. In this case, as shown in Fig. 12 as an example, the screen data generation unit 28D selects and acquires the advertisement video 60 with which the advertisement video relation information 84 having the highest rate of match with the first advertisement region relation information 82 is associated, from among the plurality of advertisement videos 60 stored in the storage 30, as an advertisement video 60A for the first advertisement region. For example, in the advertisement video 60A for the first advertisement region is the advertisement video 60 with which the advertisement video relation information 84 including the second content relation information 84A corresponding to the first content relation information 82A is associated, among the plurality of advertisement videos 60 stored in the storage 30. The second content relation information 84A corresponding to the first content relation information 82A refers to, for example, the second content relation information 84A that matches the first content relation information 82A.

The screen data generation unit 28D generates the virtual viewpoint video screen data 80 such that the first advertisement region 79 including the advertisement video 60A for the first advertisement region is displayed on the virtual viewpoint video screen 68. For example, the screen data generation unit 28D generates screen data indicating the virtual viewpoint video screen 68 on which the first advertisement region 79 in which the advertisement video 60A for the first advertisement region is displayed is superimposed on the upper right portion of the front view, as the virtual viewpoint video screen data 80.

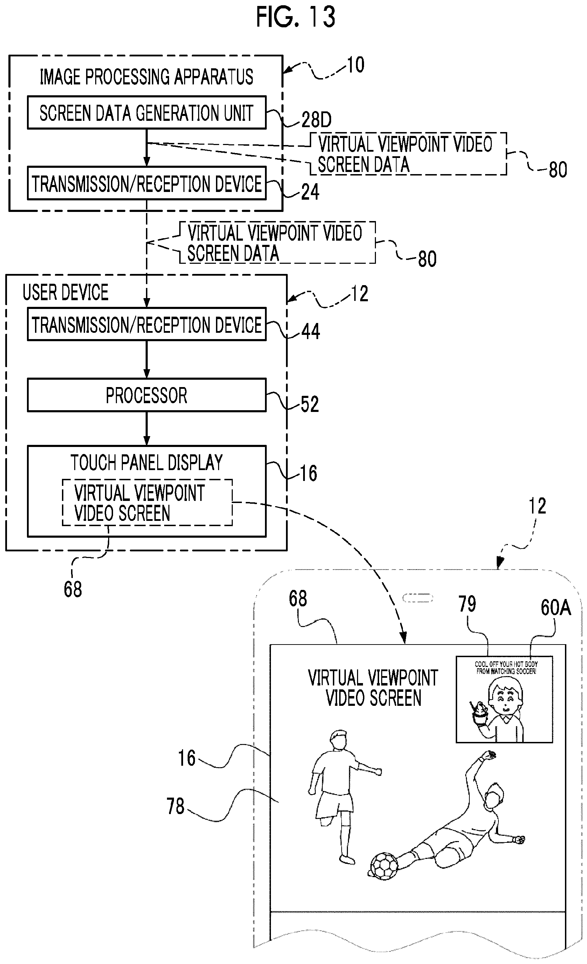

As an example, as shown in Fig. 13, in the image processing apparatus 10, the screen data generation unit 28D outputs the virtual viewpoint video screen data 80 to the transmission/reception device 24. In addition, the screen data generation unit 28D outputs the virtual viewpoint video screen data 80 to the storage device, such as the storage 30. As a result, the virtual viewpoint video screen data 80 is stored in the storage device, such as the storage 30.

The transmission/reception device 24 transmits the virtual viewpoint video screen data 80 input from the screen data generation unit 28D to the user device 12. In the user device 12, the transmission/reception device 44 receives the virtual viewpoint video screen data 80 transmitted from the image processing apparatus 10. The processor 52 displays the virtual viewpoint video screen 68 indicated by the virtual viewpoint video screen data 80 received by the transmission/reception device 44 on the touch panel display 16.

Hereinafter, an operation of the image processing apparatus 10 according to the first embodiment will be described with reference to Fig. 14.

It should be noted that Fig. 14 shows an example of a flow of the screen generation processing performed by the processor 28 of the image processing apparatus 10 according to the second embodiment. The flow of the screen generation processing shown in Fig. 14 is an example of an image processing method according to the technology of the present disclosure.

In the screen generation processing shown in Fig. 14, first, in step ST10, the reception screen generation unit 28A generates the reception screen data 70 based on the plurality of captured images 64 (see Fig. 4). After the processing of step ST10 is executed, the screen generation processing shifts to step ST12.

In step ST12, the reception screen generation unit 28A causes the transmission/reception device 24 to transmit the generated reception screen data 70 to the user device 12. After the processing of step ST12 is executed, the screen generation processing shifts to step ST14.

In a case in which the reception screen data 70 is transmitted from the image processing apparatus 10 to the user device 12 by executing the processing of step ST12, the user device 12 receives the reception screen data 70, and displays the reception screen 66 indicated by the received reception screen data 70 on the display 18 (see Fig. 4 to Fig. 6). In a case in which the reception screen 66 is displayed on the display 18 of the user device 12, the indications of the viewpoint, the gaze point, and the like are given to the user device 12 from the user 14 via the touch panel 20 (see Fig. 5 and Fig. 6). The processor 52 of the user device 12 generates the viewpoint information 74 based on the viewpoint and the gaze point which are received by the touch panel 20, and transmits the generated viewpoint information 74 to the image processing apparatus 10 via the transmission/reception device 44 (see Fig. 7).

In step ST14, the viewpoint information acquisition unit 28B determines whether or not the viewpoint information 74 is received by the transmission/reception device 24. In step ST14, in a case in which the viewpoint information 74 is not received by the transmission/reception device 24, a negative determination is made, and the screen generation processing shifts to step ST24. In step ST14, in a case in which the viewpoint information 74 is received by the transmission/reception device 24, a positive determination is made, and the screen generation processing shifts to step ST16. The viewpoint information acquisition unit 28B acquires the viewpoint information 74 received by the transmission/reception device 24 (see Fig. 7).

In step ST16, the virtual viewpoint image generation unit 28C generates the virtual viewpoint video 78 based on the viewpoint information 74 acquired by the viewpoint information acquisition unit 28B and the plurality of captured images 64 (see Fig. 8). The screen data generation unit 28D generates the virtual viewpoint video screen data 80 indicating the virtual viewpoint video screen 68 including the virtual viewpoint video 78 generated by the virtual viewpoint image generation unit 28C. After the processing of step ST16 is executed, the screen generation processing shifts to step ST18.

In step ST18, the screen data generation unit 28D generates the first advertisement region relation information 82 based on various types of information, and associates the generated first advertisement region relation information 82 with the first advertisement region 79 (see Fig. 10). After the processing of step ST18 is executed, the screen generation processing shifts to step ST20.

In step ST20, the screen data generation unit 28D selects and acquires the advertisement video 60 with which the advertisement video relation information 84 having the highest rate of match with the first advertisement region relation information 82 is associated, from among the plurality of advertisement videos 60 stored in the storage 30, as an advertisement video 60A for the first advertisement region (see Fig. 12). After the processing of step ST20 is executed, the screen generation processing shifts to step ST21.

In step ST21, the screen data generation unit 28D generates the virtual viewpoint video screen data 80 such that the first advertisement region 79 including the advertisement video 60A for the first advertisement region is displayed on the virtual viewpoint video screen 68 (see Fig. 12). That is, processing of displaying the first advertisement region 79 including the advertisement video 60Afor the first advertisement region on the virtual viewpoint video screen 68 is performed with respect to the virtual viewpoint video screen data 80 generated in step ST16 by the screen data generation unit 28D. After the processing of step ST21 is executed, the screen generation processing shifts to step ST22.

In step ST22, the screen data generation unit 28D outputs the virtual viewpoint video screen data 80 generated in step ST22 to the transmission/reception device 24 and the storage device, such as the storage 30 (see Fig. 13). As a result, the virtual viewpoint video screen data 80 is stored in the storage device, such as the storage 30, and the virtual viewpoint video screen data 80 is transmitted to the user device 12 by the transmission/reception device 24. In the user device 12, the virtual viewpoint video screen 68 indicated by the virtual viewpoint video screen data 80 transmitted from the transmission/reception device 24 is displayed by the processor 52 on the touch panel display 16 (see Fig. 13). After the processing of step ST22 is executed, the screen generation processing shifts to step ST24.

In step ST24, the screen data generation unit 28D determines whether or not a condition for ending the screen generation processing (hereinafter, referred to as an "end condition") is satisfied. Examples of the end condition include a condition that an instruction to end the screen generation processing is received by the reception device, such as the touch panel display 16. In a case in which the end condition is not satisfied in step ST24, a negative determination is made, and the screen generation processing shifts to step ST10. In step ST24, in a case in which the end condition is satisfied, a positive determination is made, and the screen generation processing ends.

As described in detail above, the image processing apparatus 10 outputs the virtual viewpoint video screen data 80 for displaying the advertisement video 60A for the first advertisement region selected from among the plurality of advertisement videos 60 in the first advertisement region 79 based on the first advertisement region relation information 82 associated with the first advertisement region 79 related to the virtual viewpoint video 78 and the advertisement video relation information 84 related to the advertisement video 60 associated with each advertisement video 60. The virtual viewpoint video screen 68 indicated by the virtual viewpoint video screen data 80 is displayed on the touch panel display 16 of the user device 12. The advertisement video 60A for the first advertisement region is displayed in the first advertisement region 79 in the virtual viewpoint video screen 68. Therefore, with the present configuration, the advertisement video 60A for the first advertisement region can be shown to the user 14 who views the virtual viewpoint video 78.

In addition, in the image processing apparatus 10, the first content relation information 82A related to the content of the virtual viewpoint video 78 is included in the first advertisement region relation information 82 associated with the first advertisement region 79. The advertisement video 60A for the first advertisement region is selected based on the first content relation information 82A related to the content of the virtual viewpoint video 78 and the advertisement video relation information 84 related to the advertisement video 60. Therefore, with the present configuration, the advertisement video 60A for the first advertisement region selected based on the first content relation information 82A related to the content of the virtual viewpoint video 78 and the advertisement video relation information 84 related to the advertisement video 60 can be shown to the user 14 who views the virtual viewpoint video 78.

In addition, in the image processing apparatus 10, the advertisement video relation information 84 includes the second content relation information 84A related to the content of the advertisement video 60. Then, the advertisement video 60 with which the advertisement video relation information 84 including the second content relation information 84A corresponding to the first content relation information 82A related to the content of the virtual viewpoint video 78 is associated is selected as the advertisement video 60A for the first advertisement region. Therefore, with the present configuration, the advertisement video 60A for the first advertisement region selected based on the first content relation information 82A related to the content of the virtual viewpoint video 78 and the second content relation information 84A related to the content of the advertisement video 60 can be shown to the user 14 who views the virtual viewpoint video 78.

In addition, in the image processing apparatus 10, the first advertisement region relation information 82 is changed according to the viewpoint information 74. In a case in which the first advertisement region relation information 82 is changed, there is a high possibility that the advertisement video relation information 84 that matches the first advertisement region relation information 82 is also changed. The fact that the advertisement video relation information 84 that matches the first advertisement region relation information 82 is changed means that the advertisement video 60 displayed in the first advertisement region 79 is also changed. Therefore, with the present configuration, the advertisement video 60 to be displayed in the first advertisement region 79 can be changed by changing the viewpoint information 74 required for the generation of the virtual viewpoint video 78.

### [Second Embodiment]

In the second embodiment, the components as described in the first embodiment will be designated by the same reference numeral, the description thereof will be omitted, and a difference from the first embodiment will be described.

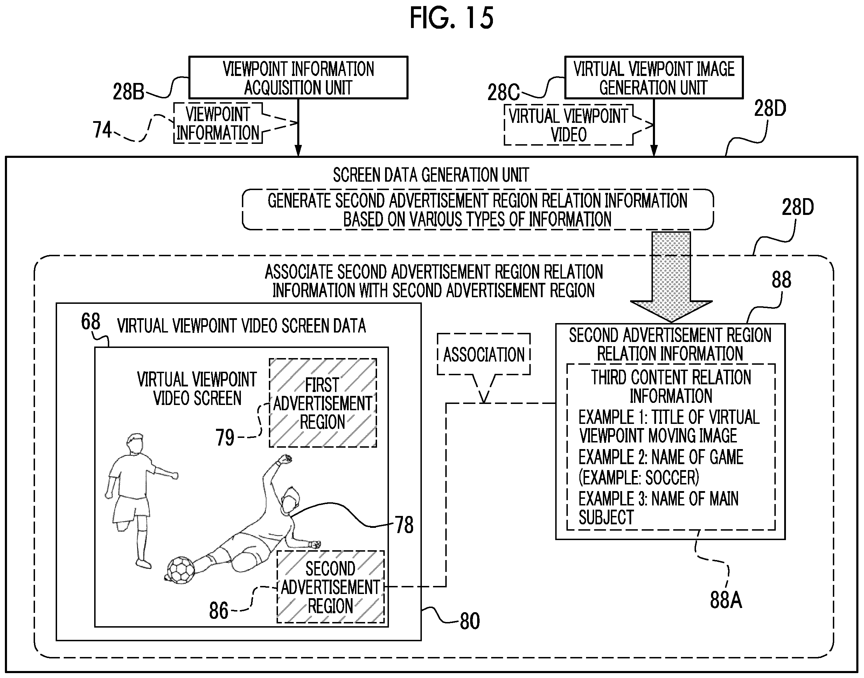

As an example, as shown in Fig. 15, the virtual viewpoint video screen 68 has a second advertisement region 86, in addition to the first advertisement region 79. That is, in the virtual viewpoint video 78, the second advertisement region 86 is displayed, in addition to the first advertisement region 79, as the region related to the virtual viewpoint video 78. The second advertisement region 86 is an example of a "second region" according to the technology of the present disclosure.

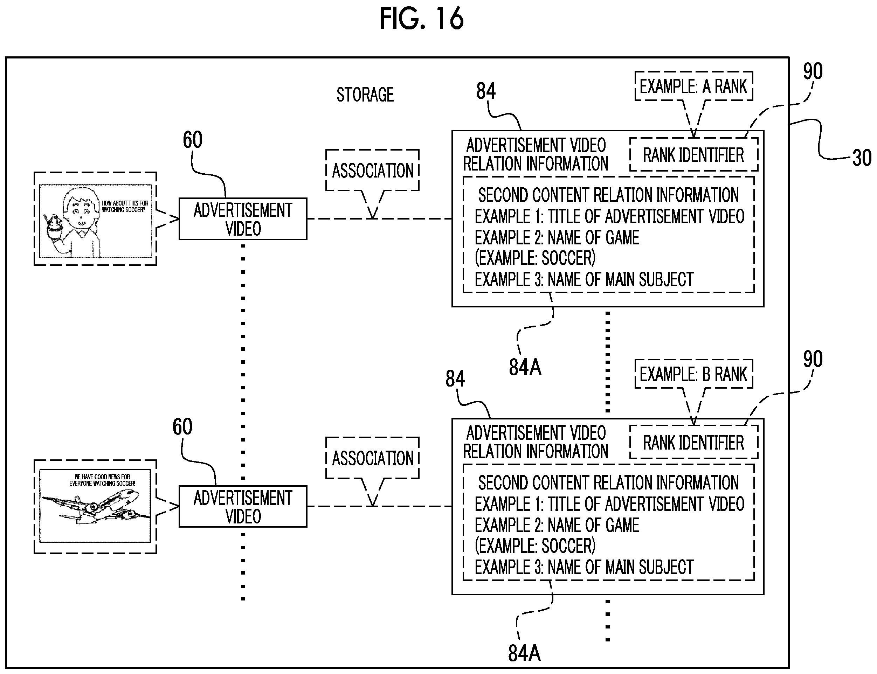

In the example shown in Fig. 15, the second advertisement region 86 has a rectangular shape, and is displayed in the lower right portion of the front view of the virtual viewpoint video screen 68. In addition, a size of the second advertisement region 86 is smaller than the size of the first advertisement region 79. It should be noted that, in addition to the size of the second advertisement region 86, for example, resolution and/or transparency may be lower than resolution and/or transparency of the first advertisement region 79. That is, the specifications of the first advertisement region 79 and the specifications of the second advertisement region 86 need only be different from each other such that a degree of interest and visibility by the user 14 is higher in the first advertisement region 79 than in the second advertisement region 86. Although details will be described below, the advertisement video 60 (see Figs. 16 to 18) is displayed in the second advertisement region 86.

The second advertisement region 86 is a region related to the virtual viewpoint video 78. The second advertisement region 86 is displayed to be superimposed on the virtual viewpoint video 78 as in the first advertisement region 79. Here, the form example is described in which the second advertisement region 86 is displayed to be superimposed on the virtual viewpoint video 78, but this is merely an example, and the second advertisement region 86 may be displayed to be embedded in the virtual viewpoint video 78.

The screen data generation unit 28D generates second advertisement region relation information 88 based on various types of information. The second advertisement region relation information 88 is information associated with the second advertisement region 86. The various types of information used for the generation of the second advertisement region relation information 88 are, for example, the same as the various types of information used for the generation of the first advertisement region relation information 82. It should be noted that the second advertisement region relation information 88 is an example of "second information" and "region relation information" according to the technology of the present disclosure.

The second advertisement region relation information 88 includes third content relation information 88A. The third content relation information 88A is information related to the content of the virtual viewpoint video 78. Examples of the third content relation information 88A include the same information as the first content relation information 82A.

In addition, in a case in which the third content relation information 88A is decided according to the type of the subject specified by performing the subject recognition processing in the same manner as the first content relation information 82A, the type of the subject specified by the screen data generation unit 28D is changed according to the viewpoint information 74 required for the generation of the virtual viewpoint video 78, so that the third content relation information 88A is also changed accordingly. For example, the third content relation information 88A is changed by the screen data generation unit 28D according to at least one of the total time information 74A, the viewpoint path information 74B, the required time information 74C, the elapsed time information 74D, the movement speed information 74E, the angle-of-view information 74F, or the gaze point information 74G included in the viewpoint information 74.

The screen data generation unit 28D associates the generated second advertisement region relation information 88 with the second advertisement region 86. It should be noted that the information in which the second advertisement region 86 and the second advertisement region relation information 88 are associated with each other may be stored in the storage device, such as the storage 30, together with the virtual viewpoint video 78 or separately from the virtual viewpoint video 78.

As shown in Fig. 16 as an example, the plurality of pieces of advertisement video relation information 84 stored in the storage 30 include a rank identifier 90, in addition to the second content relation information 84A. The rank identifier 90 is an identifier indicating a rank of the advertisement video 60. The rank identifier 90 is classified into, for example, an A rank and a B rank. The rank identifier 90 is decided on the producer side of the advertisement video 60. It should be noted that this decision method is merely an example, and as another decision method, for example, there is a decision method of specifying the type of the subject included in the advertisement video 60 by the subject recognition processing or the like described above, and deriving the rank identifier 90 suitable for the specified type of the subject by using a rank derivation table (not shown) or the like. The rank derivation table is, for example, a table in which the type of the subject is used as input and the rank identifier is used as output.

The A rank is an identifier for giving an instruction to display the advertisement video 60 associated with the advertisement video relation information 84 including the rank identifier 90 indicating the A rank in the first advertisement region 79, and the B rank is an identifier for giving an instruction to display the advertisement video 60 associated with the advertisement video relation information 84 including the rank identifier 90 indicating the b rank in the second advertisement region 86. Whether the rank identifier 90 is set to the A rank or the B rank is decided, for example, on the producer side of the advertisement video 60 according to a charge of a side (for example, an advertiser) that provides the advertisement video 60 to the user 14. The charge means, for example, that the producer side of the advertisement video 60 or a producer side of the image processing system 2 imposes the charge to the side that provides the advertisement video 60 to the user 14. The rank identifier 90 is information indicating the charge. The rank identifier 90 is an example of "charge information" according to the technology of the present disclosure.

It should be noted that, here, a content (that is, the rank) of the rank identifier 90 is decided based on the charge, but the content of the rank identifier 90 may be decided based on the standard (for example, whether or not the company that supports the home game of soccer is the provider of the advertisement video 60 or the like) other than the charge.

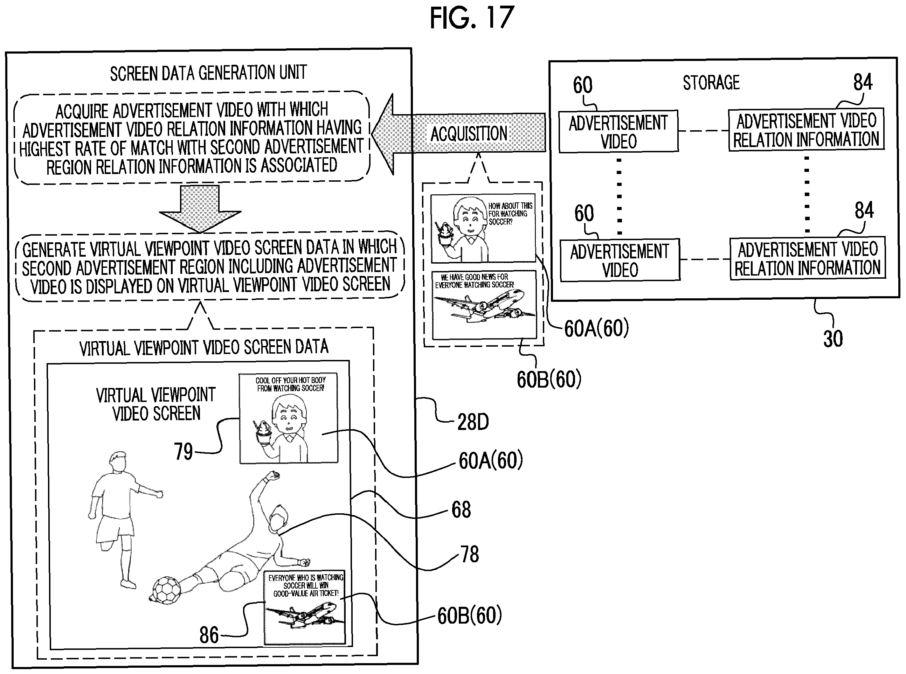

In the image processing apparatus 10, the screen data generation unit 28D selects the advertisement video 60A for the first advertisement region in the same manner described in the first embodiment, and also selects one advertisement video 60 to be displayed in the second advertisement region 86 (see Figs. 15, 17, and 18) from among the plurality of advertisement videos 60 based on the second advertisement region relation information 88 (see Fig. 16) and the advertisement video relation information 84. In this case, as shown in Fig. 17 as an example, the screen data generation unit 28D selects and acquires the advertisement video 60 with which the advertisement video relation information 84 having the highest rate of match with the second advertisement region relation information 88 is associated, from among the plurality of advertisement videos 60 stored in the storage 30, as an advertisement video 60B for the second advertisement region. For example, in the advertisement video 60B for the second advertisement region is the advertisement video 60 with which the advertisement video relation information 84 including the second content relation information 84A corresponding to the third content relation information 88A is associated, among the plurality of advertisement videos 60 stored in the storage 30. The second content relation information 84A corresponding to the third content relation information 88A refers to, for example, the second content relation information 84A that matches the third content relation information 88A.

The screen data generation unit 28D generates the virtual viewpoint video screen data 80 such that the first advertisement region 79 including the advertisement video 60A for the first advertisement region is displayed on the virtual viewpoint video screen 68, and the second advertisement region 86 including the advertisement video 60B for the second advertisement region is displayed on the virtual viewpoint video screen 68. For example, the screen data generation unit 28D generates screen data indicating the virtual viewpoint video screen 68 on which the first advertisement region 79 in which the advertisement video 60A for the first advertisement region is displayed is superimposed on the upper right portion of the front view and the second advertisement region 86 in which the advertisement video 60B for the second advertisement region is displayed is superimposed on the lower right portion of the front view, as the virtual viewpoint video screen data 80.

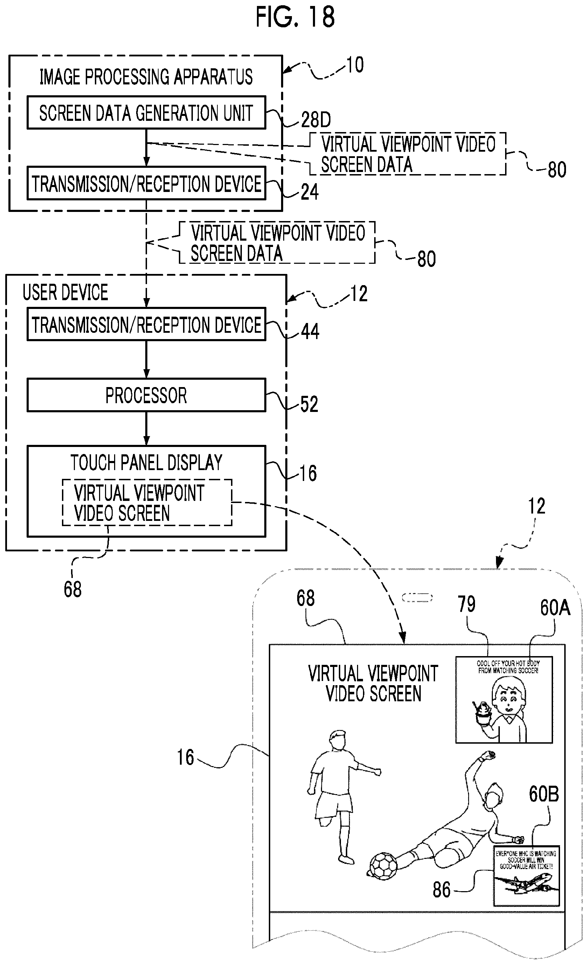

As shown in Fig. 18 as an example, the virtual viewpoint video screen data 80 generated by the screen data generation unit 28D as described above is stored in the storage device, such as a storage 30, and is transmitted from the image processing apparatus 10 to the user device 12, in the same manner as described in the first embodiment. Then, in the user device 12, the virtual viewpoint video screen data 80 transmitted from the image processing apparatus 10 is received by the transmission/reception device 44. The processor 52 displays the virtual viewpoint video screen 68 indicated by the virtual viewpoint video screen data 80 received by the transmission/reception device 44 on the touch panel display 16.

In the image processing apparatus 10, the screen data generation unit 28D outputs the virtual viewpoint video screen data 80 to the transmission/reception device 24. In addition, the screen data generation unit 28D outputs the virtual viewpoint video screen data 80 to the storage device, such as the storage 30. As a result, the virtual viewpoint video screen data 80 is stored in the storage device, such as the storage 30. It should be noted that, in the second embodiment, the virtual viewpoint video screen data 80 is an example of "second data" according to the technology of the present disclosure.

The transmission/reception device 24 transmits the virtual viewpoint video screen data 80 input from the screen data generation unit 28D to the user device 12. In the user device 12, the transmission/reception device 44 receives the virtual viewpoint video screen data 80 transmitted from the image processing apparatus 10. The processor 52 displays the virtual viewpoint video screen 68 indicated by the virtual viewpoint video screen data 80 received by the transmission/reception device 44 on the touch panel display 16. On the virtual viewpoint video screen 68, the first advertisement region 79 including the advertisement video 60A for the first advertisement region and the second advertisement region 86 including the advertisement video 60B for the second advertisement region are displayed in parallel on the same screen.

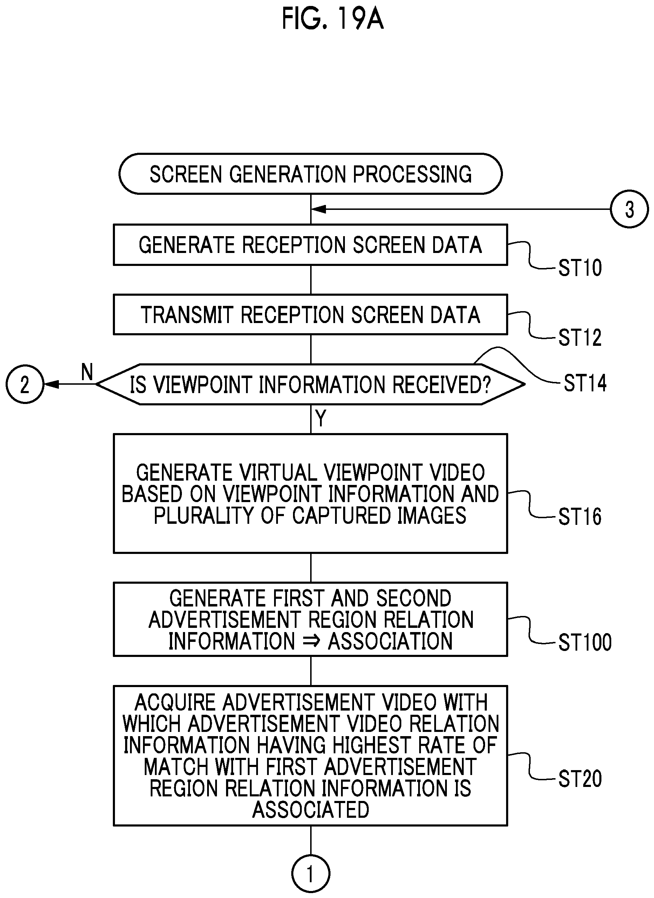

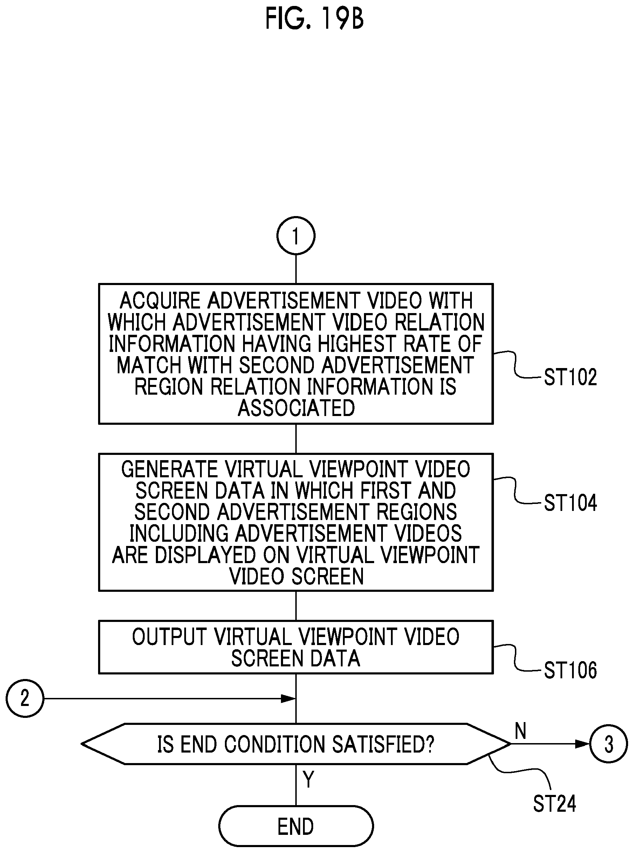

Hereinafter, an operation of the image processing apparatus 10 according to the second embodiment will be described with reference to Figs. 19Aand 19B.

It should be noted that Figs. 19A and 19B show examples of a flow of the screen generation processing performed by the processor 28 of the image processing apparatus 10 according to the second embodiment. The flows of the screen generation processing shown in Figs. 19A and 19B are examples of an image processing method according to the technology of the present disclosure. The flowcharts shown in Figs. 19A and 19B are different from the flowchart shown in Fig. 14 in that processing of step ST100 is provided instead of processing of step ST18 and pieces of processing of step ST102 to step ST106 are provided instead of processing of step ST21. In the second embodiment, hereinafter, only steps different from the flowchart shown in Fig. 14 will be described.

In the screen generation processing shown in Fig. 19A, in step ST100, the screen data generation unit 28D generates the first advertisement region relation information 82 based on various types of information, and associates the generated first advertisement region relation information 82 with the first advertisement region 79 (see Fig. 10). In addition, the screen data generation unit 28D generates the second advertisement region relation information 88 based on various types of information, and associates the generated second advertisement region relation information 88 with the second advertisement region 86 (see Fig. 16). After the processing of step ST100 is executed, the screen generation processing shifts to step ST102.

In step ST102 shown in Fig. 19B, the screen data generation unit 28D generates the virtual viewpoint video screen data 80 such that the second advertisement region 86 including the advertisement video 60B for the second advertisement region is displayed on the virtual viewpoint video screen 68 (see Fig. 17). That is, processing of displaying the second advertisement region 86 including the advertisement video 68A for the second advertisement region on the virtual viewpoint video screen 68 is performed with respect to the virtual viewpoint video screen data 80 generated in step ST16 by the screen data generation unit 28D. After the processing of step ST102 is executed, the screen generation processing shifts to step ST104.

In step ST106, the screen data generation unit 28D outputs the virtual viewpoint video screen data 80 generated in step ST104 to the transmission/reception device 24 and the storage device, such as the storage 30 (see Fig. 18). As a result, the virtual viewpoint video screen data 80 is stored in the storage device, such as the storage 30, and the virtual viewpoint video screen data 80 is transmitted to the user device 12 by the transmission/reception device 24. In the user device 12, the virtual viewpoint video screen 68 indicated by the virtual viewpoint video screen data 80 transmitted from the transmission/reception device 24 is displayed by the processor 52 on the touch panel display 16 (see Fig. 18). After the processing of step ST106 is executed, the screen generation processing shifts to step ST24.

As described in detail above, the image processing apparatus 10 outputs the virtual viewpoint video screen data 80 for displaying the advertisement video 60A for the first advertisement region selected from among the plurality of advertisement videos 60 in the first advertisement region 79 based on the first advertisement region relation information 82 associated with the first advertisement region 79 related to the virtual viewpoint video 78 and the advertisement video relation information 84 related to the advertisement video 60 associated with each advertisement video 60.

In addition, the image processing apparatus 10 outputs the virtual viewpoint video screen data 80 for displaying the advertisement video 60B for the second advertisement region selected from among the plurality of advertisement videos 60 in the second advertisement region 86 based on the second advertisement region relation information 88 associated with the second advertisement region 86 related to the virtual viewpoint video 78 and the advertisement video relation information 84 related to the advertisement video 60 associated with each advertisement video 60.

The virtual viewpoint video screen 68 indicated by the virtual viewpoint video screen data 80 is displayed on the touch panel display 16 of the user device 12. The advertisement video 60A for the first advertisement region is displayed in the first advertisement region 79 in the virtual viewpoint video screen 68, and the advertisement video 60B for the second advertisement region is displayed in the advertisement region 86 in the virtual viewpoint video screen 68 (see Fig. 18). Therefore, with the present configuration, the advertisement video 60A for the first advertisement region and the advertisement video 60B for the second advertisement region can be shown to the user 14 who views the virtual viewpoint video 78.

In addition, in the image processing apparatus 10, the second advertisement region relation information 88 is changed according to the viewpoint information 74. In a case in which the second advertisement region relation information 88 is changed, there is a high possibility that the advertisement video relation information 84 that matches the second advertisement region relation information 88 is also changed. The fact that the advertisement video relation information 84 that matches the second advertisement region relation information 88 is changed means that the advertisement video 60 displayed in the second advertisement region 86 is also changed. Therefore, with the present configuration, the advertisement video 60 to be displayed in the second advertisement region 86 can be changed by changing the viewpoint information 74 required for the generation of the virtual viewpoint video 78.

In addition, in the image processing apparatus 10, the plurality of pieces of advertisement video relation information 84 stored in the storage 30 include the rank identifier 90, in addition to the second content relation information 84A. The content of the rank identifier 90, that is, the rank given to the advertisement video 60 is decided based on the charge of the side that provides the advertisement video 60 to the user 14. Therefore, with the present configuration, the advertisement video 60 displayed in the first advertisement region 79 and the second advertisement region 86 can be changed according to the charge of the side that provides the advertisement video 60 to the user 14.

### [First Modification Example]

Hereinafter, a first modification example of the image processing apparatus 10 will be described.

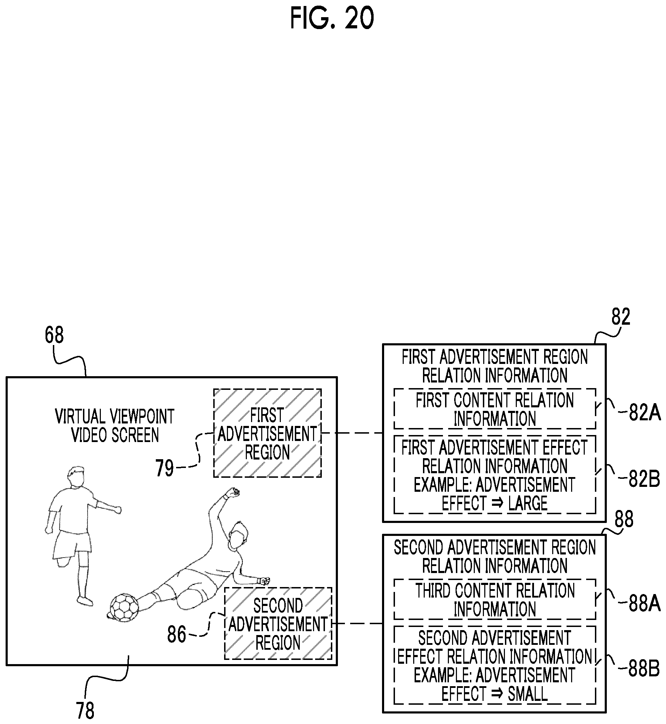

As shown in Fig. 20 as an example, the first advertisement region relation information 82 further includes first advertisement effect relation information 82B. The first advertisement effect relation information 82B is information related to an advertisement effect (for example, an advertisement effect in a case in which the advertisement video 60 is displayed in the first advertisement region 79). In addition, the second advertisement region relation information 88 further includes second advertisement effect relation information 88B. The second advertisement effect relation information 88B is information related to an advertisement effect (for example, an advertisement effect in a case in which the advertisement video 60 is displayed in the second advertisement region 86).

In the first modification example, the advertisement effect is, for example, any one of "large" or "small". The advertisement effect "large" indicates the advertisement effect which is larger than the advertisement effect "small". Whether or not the advertisement effect specified by the first advertisement effect relation information 82B is large and whether or not the advertisement effect specified by the second advertisement effect relation information 88B is large can be decided, for example, by the producer of the advertisement video 60 and/or the producer of the image processing system 2. It should be noted that, in the first modification example, the advertisement effect can be expressed on a finer scale than "large" and "small". In addition, the magnitude of the advertisement effect is also changed depending on the viewpoint information 74.

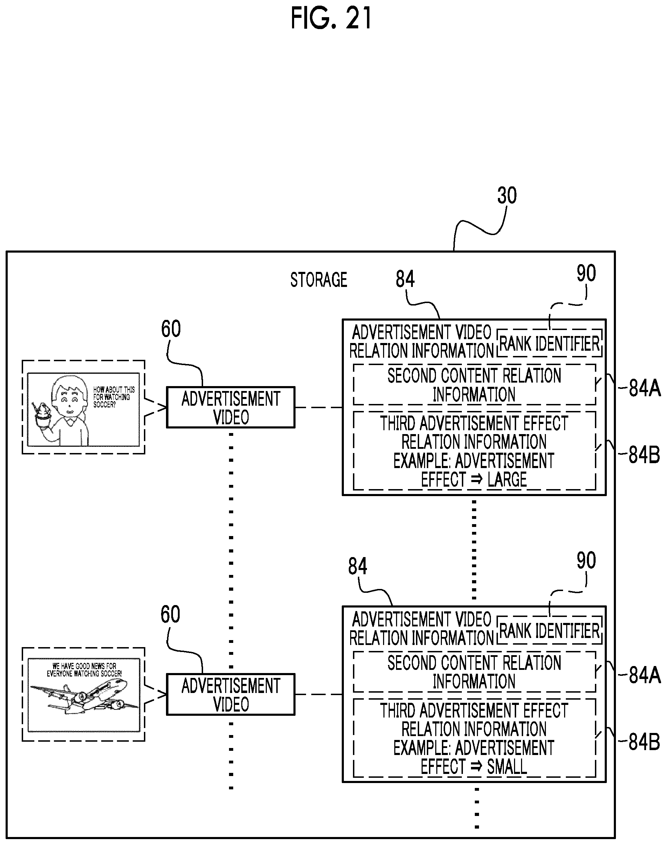

As shown in Fig. 21 as an example, the advertisement video relation information 84 further includes third advertisement effect relation information 84B. The third advertisement effect relation information 84B is information related to an advertisement effect (for example, an advertisement effect in a case in which the advertisement video 60 with which the advertisement video relation information 84 is associated is displayed). Whether or not the advertisement effect specified from the third advertisement effect relation information 84B is large is decided, for example, by the side that provides the advertisement video 60 to the user 14, the producer of the advertisement video 60, and/or the producer of the image processing system 2.

As described above, in the image processing apparatus 10 according to the first modification example, the first advertisement effect relation information 82B is included in the first advertisement region relation information 82 as the information related to the advertisement effect (see Fig. 20). In addition, as the information related to the advertisement effect to be compared with the first advertisement effect relation information 82B in a case in which the rate of match between the first advertisement region relation information 82 and the advertisement video relation information 84 is determined, the third advertisement effect relation information 84B is included in the advertisement video relation information 84 (see Fig. 21). Therefore, with the present configuration, the advertisement video 60A for the first advertisement region selected from among the plurality of advertisement videos 60 based on the advertisement effect can be shown to the user 14 who views the virtual viewpoint video 78, via the first advertisement region 79.

It should be noted that, instead of the third advertisement effect relation information 84B, the advertisement video 60A for the first advertisement region may be selected based on the first advertisement effect relation information 82B and the rank decided by the rank identifier 90. For example, in a case in which the advertisement effect of the first advertisement effect relation information 82B is "large", the advertisement video 60 to which the rank identifier of the A rank is given may be displayed in the first advertisement region 79. That is, an advertisement having a large charge amount may be displayed in a region in which the advertisement effect is high.

In addition, in the image processing apparatus 10 according to the first modification example, the second advertisement effect relation information 88B is included in the second advertisement region relation information 88 as the information related to the advertisement effect (see Fig. 20). In addition, as the information related to the advertisement effect to be compared with the second advertisement effect relation information 88B in a case in which the rate of match between the second advertisement region relation information 88 and the advertisement video relation information 84 is determined, the third advertisement effect relation information 84B is included in the advertisement video relation information 84 (see Fig. 21). Therefore, with the present configuration, the advertisement video 60B for the second advertisement region selected from among the plurality of advertisement videos 60 based on the advertisement effect can be shown to the user 14 who views the virtual viewpoint video 78, via the second advertisement region 86.

In addition, also in the second advertisement region 86, similarly to the first advertisement region 79, instead of the third advertisement effect relation information 84B, the advertisement video 60B for the second advertisement region may be selected based on the second advertisement effect relation information 88B and the rank decided by the rank identifier 90. For example, in a case in which the advertisement effect of the second advertisement effect relation information 88B is "small", the advertisement video 60 to which the rank identifier of the B rank is given may be displayed in the second advertisement region 86. That is, an advertisement having a small charge amount may be displayed in a region in which the advertisement effect is low.

In addition, the first advertisement effect relation information 82B and the second advertisement effect relation information 88B may be changed based on the viewpoint information 74. In a case in which the first advertisement region 79 and the second advertisement region 86 are displayed to be embedded in the virtual viewpoint video 78, the positions, the sizes, and/or the directions of the first advertisement region 79 and the second advertisement region 86 are changed depending on the viewpoint position and/or the direction decided by the viewpoint information 74. Therefore, the advertisement effects of the first advertisement region 79 and the second advertisement region 86 are changed according to the viewpoint information 74. In this way, the first advertisement effect relation information 82B and the second advertisement effect relation information 88B may be decided in consideration of the advertisement effect decided by the viewpoint information 74. In this case, for example, an advertisement having a large charge amount is displayed in the second advertisement region 86. For example, in a case in which the second advertisement region 86 is the viewpoint position disposed at a position closer to the center than the first advertisement region 79, the advertisement effect of the second advertisement effect relation information 88B may be set to "large" and the advertisement effect of the first advertisement effect relation information 82B may be set to "small".

### [Second Modification Example]

Hereinafter, a second modification example of the image processing apparatus 10 will be described.

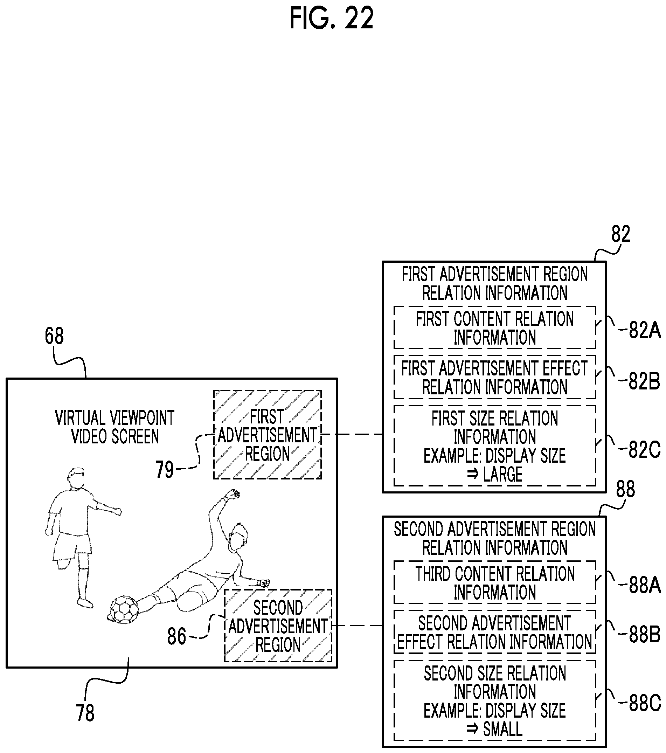

As shown in Fig. 22 as an example, the first advertisement region relation information 82 further includes first size relation information 82C. The first size relation information 82C is information related to a size in which the advertisement video 60 is displayed in the first advertisement region 79. In addition, the second advertisement region relation information 88 further includes second size relation information 88C. The second size relation information 88C is information related to a size in which the advertisement video 60 is displayed in the second advertisement region 86. In the second modification example, the size specified from the second size relation information 88C is, for example, any one of "large" or "small". The size "large" indicates the size which is larger than the size "small".

The first size relation information 82C and the second size relation information 88C may have a two-dimensional size, or may have a three-dimensional size. For example, the two-dimensional size may be used in a case in which the first advertisement region 79 is displayed to be superimposed on the virtual viewpoint video 78, and the three-dimensional size may be used in a case in which the first advertisement region 79 is displayed to be embedded in the virtual viewpoint video 78.

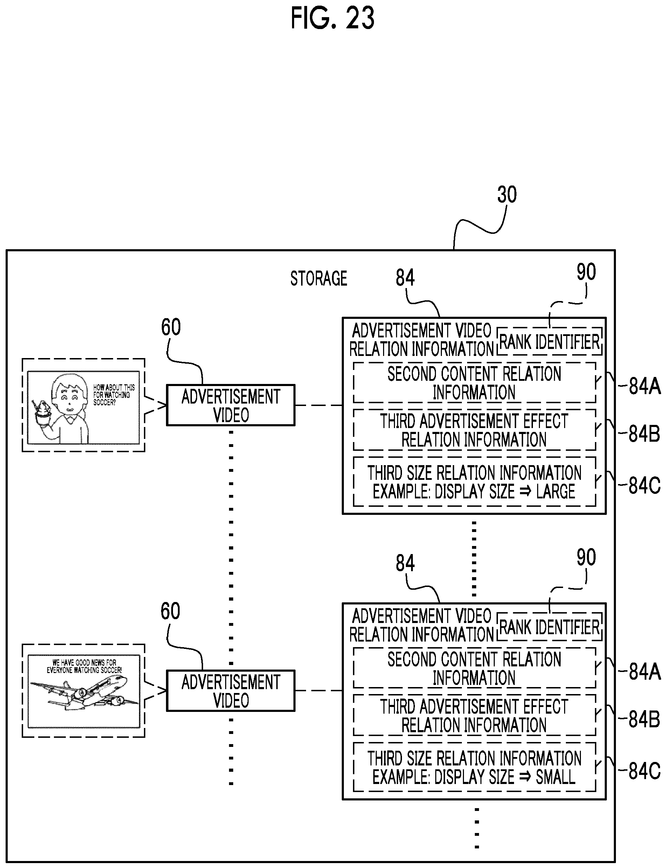

As shown in Fig. 23 as an example, the advertisement video relation information 84 further includes third size relation information 84C. The third size relation information 84C is information related to the size (for example, the size displayed on the screen) of the advertisement video 60. In the second modification example, the size specified from the third size relation information 84C is, for example, any one of "large" or "small". The size "large" indicates the size which is larger than the size "small".

The third size relation information 84C may have a three-dimensional size, or may have a three-dimensional size. For example, the two-dimensional size may be used in a case in which the advertisement video 60 is the two-dimensional image, and the three-dimensional size may be used in a case in which the advertisement video 60 is the virtual viewpoint image.

As described above, in the image processing apparatus 10 according to the second modification example, as the information related to the size in which the advertisement video 60 is displayed in the first advertisement region 79, the first size relation information 82C is included in the first advertisement region relation information 82 (see Fig. 22). In addition, as the information related to the size to be compared with the first size relation information 82C in a case in which the rate of match between the first advertisement region relation information 82 and the advertisement video relation information 84 is determined, the third size relation information 84C is included in the advertisement video relation information 84 (see Fig. 23). Therefore, with the present configuration, the advertisement video 60A for the first advertisement region selected from among the plurality of advertisement videos 60 based on the size in which the advertisement video 60 is displayed in the first advertisement region 79 and the size of the advertisement video 60 can be shown to the user 14 who views the virtual viewpoint video 78, via the first advertisement region 79.

In addition, in the image processing apparatus 10 according to the first modification example, as the information related to the size in which the advertisement video 60 is displayed in the second advertisement region 86, the second size relation information 88C is included in the second advertisement region relation information 88 (see Fig. 22). In addition, as the information related to the size to be compared with the second size relation information 88C in a case in which the rate of match between the second advertisement region relation information 88 and the advertisement video relation information 84 is determined, the third size relation information 84C is included in the advertisement video relation information 84 (see Fig. 23). Therefore, with the present configuration, the advertisement video 60B for the second advertisement region selected from among the plurality of advertisement videos 60 based on the size in which the advertisement video 60 is displayed in the second advertisement region 86 and the size of the advertisement video 60 can be shown to the user 14 who views the virtual viewpoint video 78, via the second advertisement region 86.

In addition, the first size relation information 82C and the second size relation information 88C may be changed based on the viewpoint information 74. In a case in which the first advertisement region 79 and the second advertisement region 86 are displayed to be embedded in the virtual viewpoint video 78, the sizes of the first advertisement region 79 and the second advertisement region 86 are changed depending on the viewpoint position and/or the direction decided by the viewpoint information 74. In this way, the first size relation information 82C and the second size relation information 88C may be decided in consideration of the display size decided by the viewpoint information 74. For example, depending on the viewpoint position, the second advertisement region 86 is displayed in a size larger than the size of the first advertisement region 79. In this case, the advertisement of which the display size specified by the first size relation information 82C is "small", the display size specified by the second size relation information 88C is "large", and the size specified from the third size relation information 84C is "large" is displayed in the second advertisement region 86.

### [Third Modification Example]

Hereinafter, a third modification example of the image processing apparatus 10 will be described.

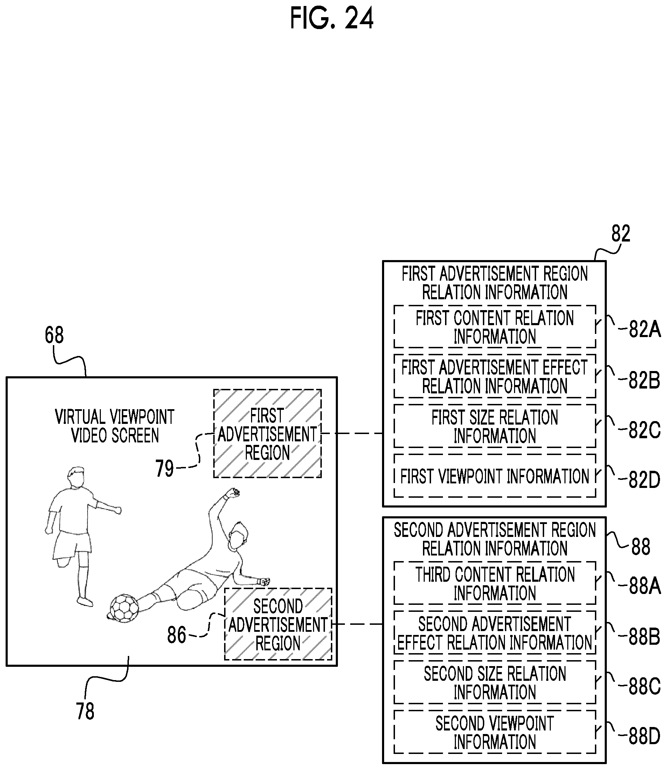

As shown in Fig. 24 as an example, the first advertisement region relation information 82 further includes first viewpoint information 82D. The first viewpoint information 82D is the viewpoint information 74 required for the generation of the virtual viewpoint video 78. In addition, the second advertisement region relation information 88 further includes second viewpoint information 88D. The second viewpoint information 88D is also the viewpoint information 74 required for the generation of the virtual viewpoint video 78, similarly to the first viewpoint information 82D. That is, since the appearance of the first advertisement region 79 and the second advertisement region 86 is decided in a case in which the viewpoint information 74 is decided, the first viewpoint information 82D and the second viewpoint information 88D are also decided in a case in which the viewpoint information 74 is decided.

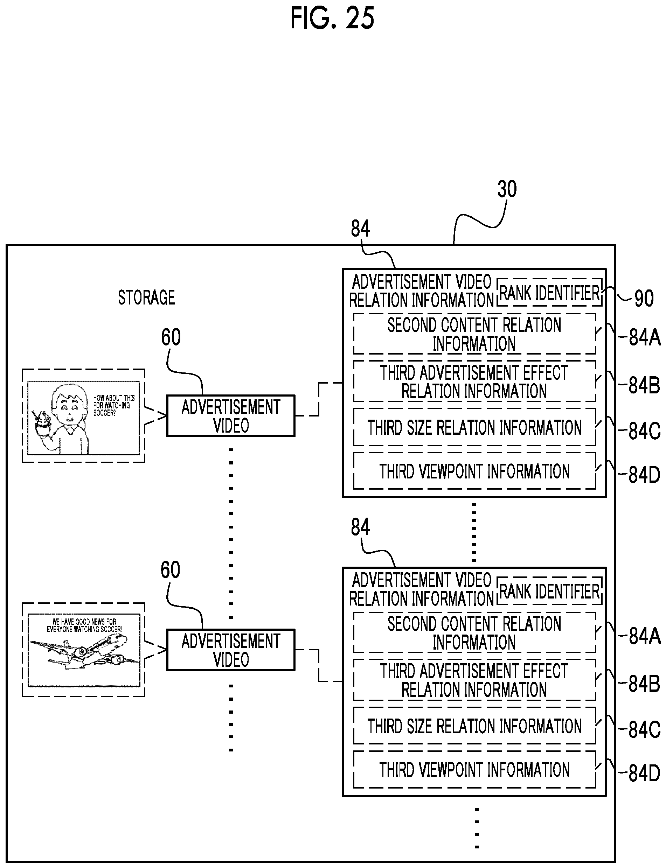

As shown in Fig. 25 as an example, the advertisement video relation information 84 further includes third viewpoint information 84D. The technical meaning of the third viewpoint information 84D is the same as the technical meaning of the viewpoint information 74. The third viewpoint information 84D is the viewpoint information used for the generation of the virtual viewpoint video, and for example, is decided by the side that provides the advertisement video 60 to the user 14, the producer of the advertisement video 60, and/or the producer of the image processing system 2.

As described above, in the image processing apparatus 10 according to the third modification example, the first viewpoint information 82D is included in the first advertisement region relation information 82 (see Fig. 24). In addition, the third viewpoint information 84D to be compared with the first viewpoint information 82D in a case in which the rate of match between the first advertisement region relation information 82 and the advertisement video relation information 84 is determined is included in the advertisement video relation information 84 (see Fig. 25). Therefore, with the present configuration, the advertisement video 60A for the first advertisement region selected from among the plurality of advertisement videos 60 based on the first viewpoint information 82D included in the first advertisement region relation information 82 and the third viewpoint information 84D included in the advertisement video relation information 84 can be shown to the user 14 who views the virtual viewpoint video 78, via the first advertisement region 79.

For example, in a case in which the advertisement video 60 is the virtual viewpoint video, the advertisement video 60 seen from the same viewpoint position as the virtual viewpoint video 78 can be displayed in the first advertisement region 79. As a result, the user 14 can see the advertisement video 60 without a sense of discomfort. It should be noted that it is not necessary that first viewpoint information 82D and the third viewpoint information 84D are completely the same, but it is desirable that the first viewpoint information 82D and the third viewpoint information 84D are the same to the extent that the user 14 does not feel a sense of discomfort. In addition, in a case in which the third viewpoint information 84D is different from the viewpoint information 74, the viewpoint position for seeing the advertisement video 60, which is the virtual viewpoint video, may be changed such that the third viewpoint information 84D matches the viewpoint information 74, and may be displayed in the first advertisement region 79. For example, in a case in which the user changes the viewpoint information 74, the display of the advertisement video 60A for the first advertisement region may also be changed and displayed in the same manner.

In addition, in the image processing apparatus 10 according to the third modification example, the second viewpoint information 88D is included in the second advertisement region relation information 88 (see Fig. 24). In addition, the third viewpoint information 84D to be compared with the second viewpoint information 88D in a case in which the rate of match between the second advertisement region relation information 88 and the advertisement video relation information 84 is determined is included in the advertisement video relation information 84 (see Fig. 25). Therefore, with the present configuration, the advertisement video 60B for the second advertisement region selected from among the plurality of advertisement videos 60 based on the second viewpoint information 88D included in the second advertisement region relation information 88 and the third viewpoint information 84D included in the advertisement video relation information 84 can be shown to the user 14 who views the virtual viewpoint video 78, via the second advertisement region 86. The advertisement video 60B for the second advertisement region may be changed and displayed in the same manner as the advertisement video 60A for the first advertisement region.

It should be noted that the first viewpoint information 82D may include first viewpoint path information corresponding to the viewpoint path information 74B as information related to a first viewpoint path (for example, the viewpoint path P1). In addition, the second viewpoint information 88D may also include second viewpoint path information corresponding to the viewpoint path information 74B as information related to a second viewpoint path (for example, the viewpoint path P1). Further, the third viewpoint information 84D may also include third viewpoint path information as information related to a third viewpoint path (for example, a viewpoint path decided by the side that provides the advertisement video 60 to the user 14, the producer of the advertisement video 60, and/or the producer of the image processing system 2).

Therefore, with the present configuration, the advertisement video 60A for the first advertisement region selected from among the plurality of advertisement videos 60 based on the first viewpoint path information included in the first viewpoint information 82D and the third viewpoint path information included in the third viewpoint information 84D can be shown to the user 14 who views the virtual viewpoint video 78, via the first advertisement region 79. In addition, with the present configuration, the advertisement video 60B for the second advertisement region selected from among the plurality of advertisement videos 60 based on the second viewpoint path information included in the second viewpoint information 88D and the third viewpoint path information included in the third viewpoint information 84D can be shown to the user 14 who views the virtual viewpoint video 78, via the second advertisement region 86.

It should be noted that, in a case in which the advertisement video 60 is the virtual viewpoint video, by changing the third viewpoint path information in the same manner as the first viewpoint path information or the second viewpoint path information, the advertisement video 60A for the first advertisement region or the advertisement video 60B for the second advertisement region may be displayed.

### [Fourth Modification Example]

Hereinafter, a fourth modification example of the image processing apparatus 10 will be described.

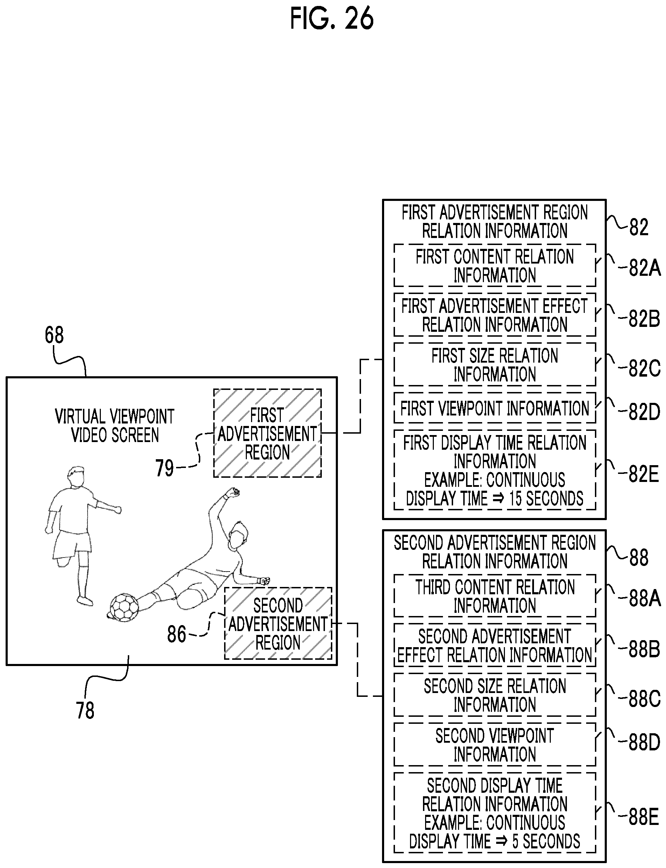

As shown in Fig. 26 as an example, the first advertisement region relation information 82 further includes first display time relation information 82E. The first display time relation information 82E is information related to a time in which the first advertisement region 79 is displayed (for example, a time in which the first advertisement region 79 is continuously displayed on the virtual viewpoint video screen 68). In addition, the second advertisement region relation information 88 further includes second display time relation information 88E. The second display time relation information 88E is information related to a time in which the second advertisement region 86 is displayed (for example, a time in which the second advertisement region 86 is continuously displayed on the virtual viewpoint video screen 68). In the fourth modification example, the time specified from the first display time relation information 82E and/or the time specified from the second display time relation information 88E are, for example, times decided by the producer of the advertisement video 60 and/or the producer of the image processing system 2. For example, in a case in which the viewpoint information 74 is decided, the times during which the first advertisement region 79 and the second advertisement region 86 are displayed are decided.

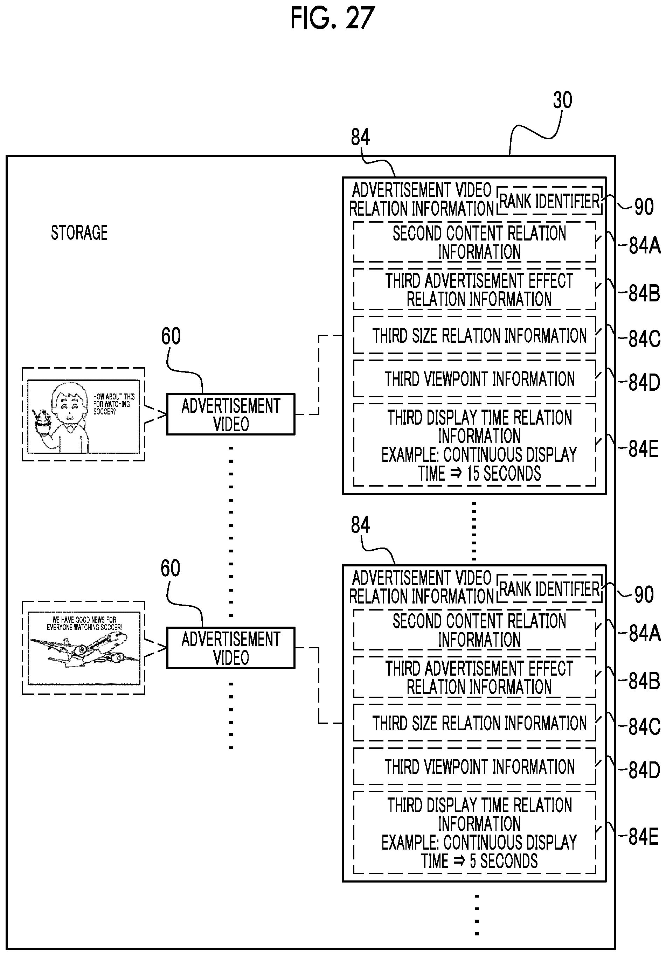

As shown in Fig. 27 as an example, the advertisement video relation information 84 further includes third display time relation information 84E. The third display time relation information 84E is a time decided in advance (for example, a time in which the advertisement video 60 is continuously displayed) as a time in which the advertisement video 60 is displayed. In the fourth modification example, the time specified from the third display time relation information 84E is, for example, a time decided by the side that provides the advertisement video 60 to the user 14, the producer of the advertisement video 60, and/or the producer of the image processing system 2.

As described above, in the image processing apparatus 10 according to the fourth modification example, as the information related to the time in which the advertisement video 60 is displayed in the first advertisement region 79, the first display time relation information 82E is included in the first advertisement region relation information 82 (see Fig. 26). In addition, as the information related to the time to be compared with the first display time relation information 82E in a case in which the rate of match between the first advertisement region relation information 82 and the advertisement video relation information 84 is determined, the third display time relation information 84E is included in the advertisement video relation information 84 (see Fig. 27). Therefore, with the present configuration, the advertisement video 60A for the first advertisement region selected from among the plurality of advertisement videos 60 based on the time in which the advertisement video 60 is displayed in the first advertisement region 79 and the time decided in advance as the time in which the advertisement video 60 is displayed can be shown to the user 14 who views the virtual viewpoint video 78, via the first advertisement region 79.

In addition, in the fourth modification example, examples of the time specified from the first display time relation information 82E include the time in which the first advertisement region 79 is continuously displayed on the virtual viewpoint video screen 68, and examples of the time specified from the third display time relation information 84E include the time in which the advertisement video 60 is continuously displayed. Therefore, with the present configuration, the advertisement video 60A for the first advertisement region selected from among the plurality of advertisement videos 60 based on the time in which the advertisement video 60 is continuously displayed in the first advertisement region 79 and the time decided in advance as the time in which the advertisement video 60 is continuously displayed can be shown to the user 14 who views the virtual viewpoint video 78, via the first advertisement region 79.

In addition, in the image processing apparatus 10 according to the fourth modification example, as the information related to the time in which the advertisement video 60 is displayed in the second advertisement region 86, the second display time relation information 88E is included in the second advertisement region relation information 88 (see Fig. 26). In addition, as the information related to the time to be compared with the second display time relation information 88E in a case in which the rate of match between the second advertisement region relation information 88 and the advertisement video relation information 84 is determined, the third display time relation information 84E is included in the advertisement video relation information 84 (see Fig. 27). Therefore, with the present configuration, the advertisement video 60B for the second advertisement region selected from among the plurality of advertisement videos 60 based on the time in which the second advertisement region 86 is displayed and the time decided in advance as the time in which the advertisement video 60 is displayed can be shown to the user 14 who views the virtual viewpoint video 78, via the second advertisement region 86.

In addition, in the fourth modification example, examples of the time specified from the second display time relation information 88E include the time in which the second advertisement region 86 is continuously displayed on the virtual viewpoint video screen 68, and examples of the time specified from the third display time relation information 84E include the time in which the advertisement video 60 is continuously displayed. Therefore, with the present configuration, the advertisement video 60B for the second advertisement region selected from among the plurality of advertisement videos 60 based on the time in which the second advertisement region 86 is continuously displayed and the time decided in advance as the time in which the advertisement video 60 is continuously displayed can be shown to the user 14 who views the virtual viewpoint video 78, via the second advertisement region 86.

It should be noted that, in the fourth modification example, examples of the time specified from the first display time relation information 82E include the time in which the first advertisement region 79 is continuously displayed on the virtual viewpoint video screen 68, but this is merely an example, and the time specified from the first display time relation information 82E may be a time in which the first advertisement region 79 is intermittently displayed on the virtual viewpoint video screen 68.

In addition, in the fourth modification example, examples of the time specified from the second display time relation information 88E include the time in which the second advertisement region 86 is continuously displayed on the virtual viewpoint video screen 68, but this is merely an example, and the time specified from the second display time relation information 88E may be a time in which the second advertisement region 86 is intermittently displayed on the virtual viewpoint video screen 68.

### [Fifth Modification Example]

Hereinafter, a fifth modification example of the image processing apparatus 10 will be described.

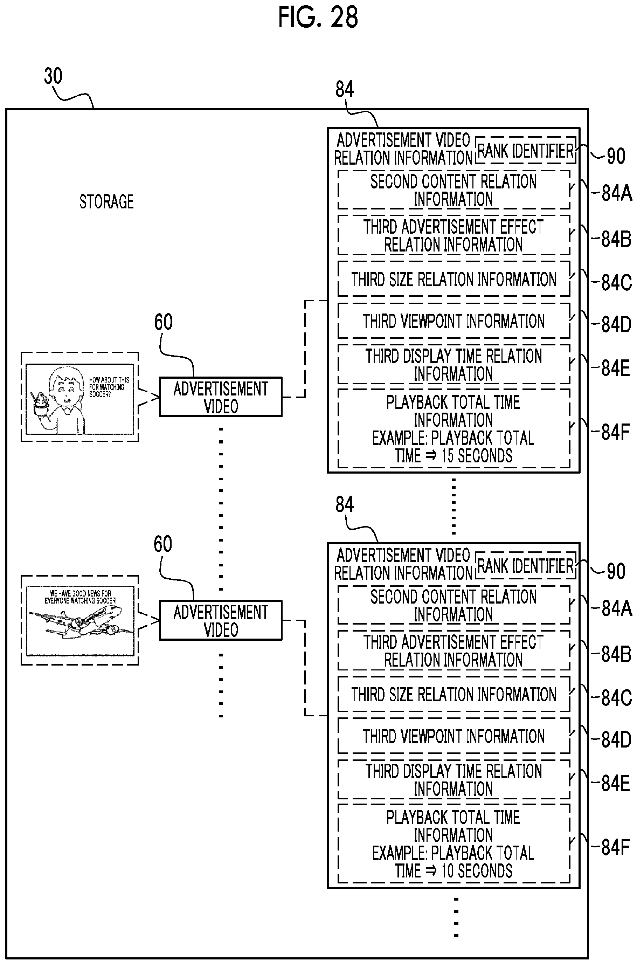

As shown in Fig. 28 as an example, the advertisement video relation information 84 further includes playback total time information 84F. The playback total time information 84F is information indicating a playback total time. The playback total time refers to a time decided in advance as a time required from the start to the end of the playback of the advertisement video 60 (for example, a time from the start of the playback to the end of the playback in a case in which the playback is performed at a standard speed without double-speed playback). The playback total time is, for example, a time decided by the side that provides the advertisement video 60 to the user 14, the producer of the advertisement video 60, and/or the producer of the image processing system 2.

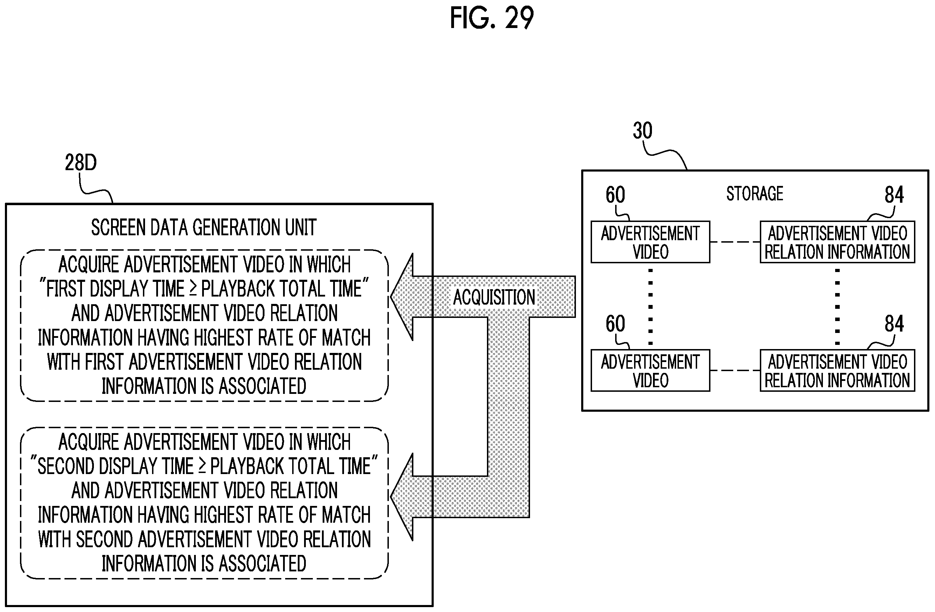

As shown in Fig. 29 as an example, the screen data generation unit 28D selects and acquires the advertisement video 60 in which a first display time is equal to or longer than the playback total time indicated by the playback total time information 84F and the advertisement video relation information 84 the highest rate of match with the first advertisement region relation information 82 is associated, from among the plurality of advertisement videos 60 stored in the storage 30, as the advertisement video 60A for the first advertisement region. Here, the first display time refers to the time specified from the first display time relation information 82E included in the first advertisement region relation information 82.

In addition, the screen data generation unit 28D selects and acquires the advertisement video 60 in which a second display time is equal to or longer than the playback total time indicated by the playback total time information 84F and the advertisement video relation information 84 the highest rate of match with the second advertisement region relation information 88 is associated, from among the plurality of advertisement videos 60 stored in the storage 30, as the advertisement video 60B for the second advertisement region. Here, the second display time refers to the time specified from the second display time relation information 88E included in the second advertisement region relation information 88.

The screen data generation unit 28D generates the virtual viewpoint video screen data 80 based on the first display time relation information 82E and the playback total time information 84F. In addition, the screen data generation unit 28D generates the virtual viewpoint video screen 68 based on the second display time relation information 88E and the playback total time information 84F.

That is, the screen data generation unit 28D generates the virtual viewpoint video screen data 80 based on the advertisement video 60A for the first advertisement region selected and acquired from the storage 30 based on the first display time relation information 82E and the playback total time information 84F, and the advertisement video 60B for the second advertisement region selected and acquired from the storage 30 based on the second display time relation information 88E and the playback total time information 84F.

As described above, in the image processing apparatus according to the fifth modification example, the advertisement video 60A for the first advertisement region is selected based on the first display time relation information 82E and the playback total time information 84F, and the virtual viewpoint video screen data 80 is generated based on the advertisement video 60A for the first advertisement region. Therefore, with the present configuration, the advertisement video 60A for the first advertisement region obtained as the moving image in consideration of the first display time relation information 82E and the playback total time information 84F can be shown to the user 14 who views the virtual viewpoint video 78, via the first advertisement region 79.

For example, the advertisement video 60 that ends within a time in which the first advertisement region 79 is continuously displayed is displayed in the first advertisement region 79. As a result, the advertisement video 60 can be continuously shown to the user 14 from the beginning to the end.

In addition, in the image processing apparatus according to the fifth modification example, the advertisement video 60B for the second advertisement region is selected based on the second display time relation information 88E and the playback total time information 84F, and the virtual viewpoint video screen data 80 is generated based on the advertisement video 60B for the second advertisement region. Therefore, with the present configuration, the advertisement video 60B for the second advertisement region obtained as the moving image in consideration of the second display time relation information 88E and the playback total time information 84F can be shown to the user 14 who views the virtual viewpoint video 78, via the second advertisement region 86. A specific example thereof is the same as the specific example of the advertisement video 60A for the first advertisement region.

### [Sixth Modification Example]

Hereinafter, a sixth modification example of the image processing apparatus 10 will be described.

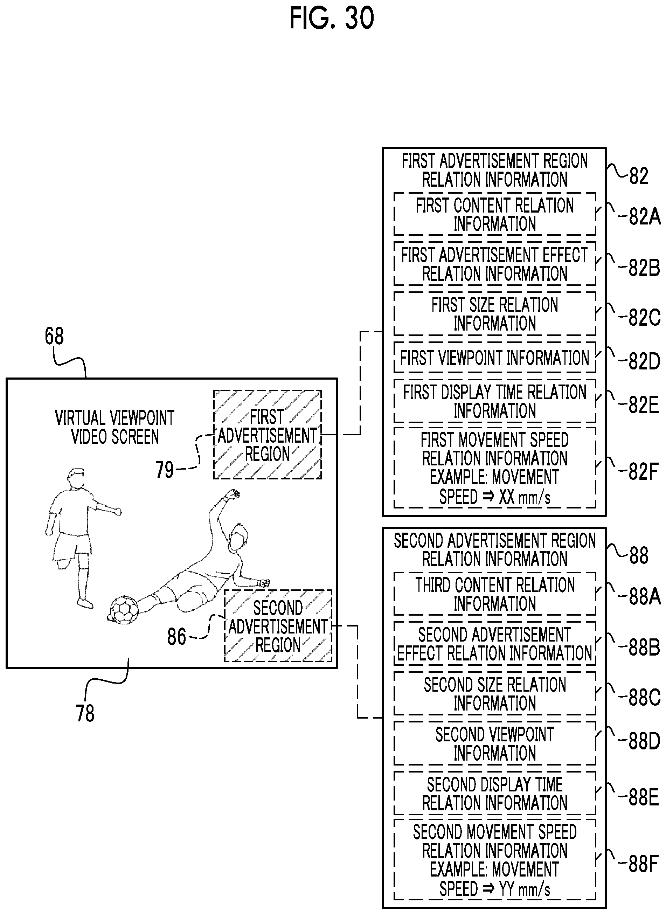

As shown in Fig. 30 as an example, the first advertisement region relation information 82 further includes first movement speed relation information 82F. The first movement speed relation information 82F is information related to a movement speed of a first viewpoint (for example, a viewpoint included in the viewpoint path P1) required for the generation of the virtual viewpoint video 78. Examples of the movement speed of the first viewpoint include an average value of the movement speeds specified from the movement speed information 74E given to the plurality of viewpoints included in the viewpoint information 74. It should be noted that the average value is merely an example, and the movement speed specified from the movement speed information 74E given to any one viewpoint, a median value of the movement speeds specified from the movement speed information 74E given to the plurality of viewpoints included in the viewpoint information 74, a most frequent value of the movement speeds specified from the movement speed information 74E given to the plurality of viewpoints included in the viewpoint information 74, or the like may be used.

In addition, the second advertisement region relation information 88 further includes second movement speed relation information 88F. The second movement speed relation information 88F is information related to a movement speed of a second viewpoint (for example, a viewpoint included in the viewpoint path P1) required for the generation of the virtual viewpoint video 78. Examples of the movement speed of the second viewpoint include an average value of the movement speeds specified from the movement speed information 74E given to the plurality of viewpoints included in the viewpoint information 74. It should be noted that the average value is merely an example, and the movement speed specified from the movement speed information 74E given to any one viewpoint, a median value of the movement speeds specified from the movement speed information 74E given to the plurality of viewpoints included in the viewpoint information 74, a most frequent value of the movement speeds specified from the movement speed information 74E given to the plurality of viewpoints included in the viewpoint information 74, or the like may be used.

The movement speed specified from the second movement speed relation information 88F and/or the time specified from the second display time relation information 88E are, for example, times decided by the producer of the advertisement video 60 and/or the producer of the image processing system 2.

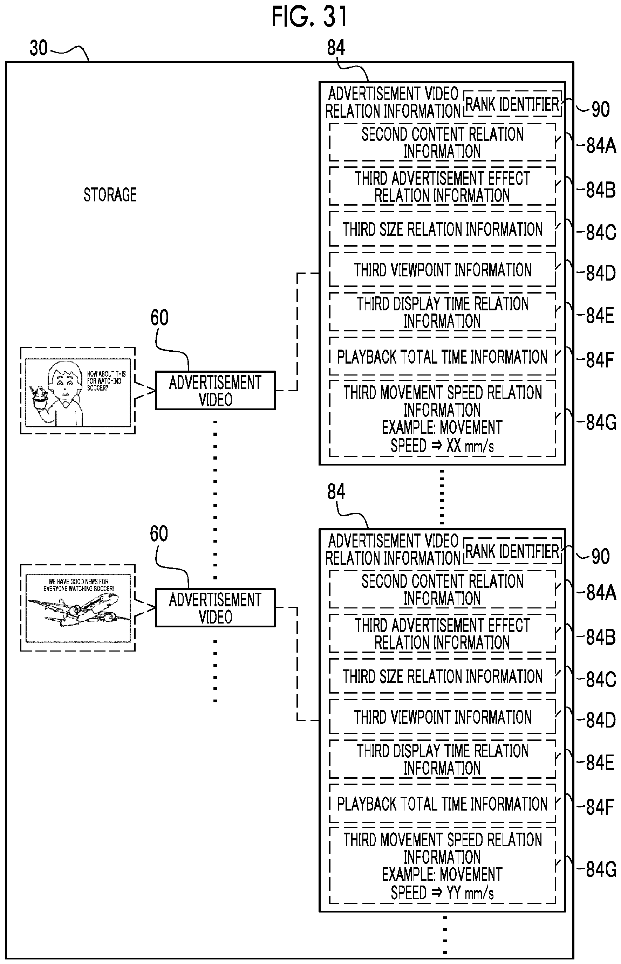

As shown in Fig. 31 as an example, the advertisement video relation information 84 further includes third movement speed relation information 84G. The third movement speed relation information 84G is information related to a movement speed decided in advance as a movement speed of a third viewpoint required for the generation of the virtual viewpoint video. The technical meaning of the third viewpoint is the same as the technical meaning of the first viewpoint and the second viewpoint. The technical meaning of the movement speed of the third viewpoint is also the same as the technical meaning of the first viewpoint and the second viewpoint. The third movement speed relation information 84G is, for example, a time decided by the side that provides the advertisement video 60 to the user 14, the producer of the advertisement video 60, and/or the producer of the image processing system 2.

As described above, in the image processing apparatus 10 according to the sixth modification example, as the information related to the movement speed of the first viewpoint required for the generation of the virtual viewpoint video 78, the first movement speed relation information 82F is included in the first advertisement region relation information 82 (see Fig. 30). In addition, as the information related to the movement time to be compared with the first movement speed relation information 82F in a case in which the rate of match between the first advertisement region relation information 82 and the advertisement video relation information 84 is determined, the third movement speed relation information 84G is included in the advertisement video relation information 84 (see Fig. 31). Therefore, with the present configuration, the advertisement video 60A for the first advertisement region selected from among the plurality of advertisement videos 60 based on the movement speed of the first viewpoint and the movement speed decided in advance as the movement speed of the third viewpoint required for the generation of the virtual viewpoint video can be shown to the user 14 who views the virtual viewpoint video 78, via the first advertisement region 79.

In addition, in the image processing apparatus 10 according to the sixth modification example, as the information related to the movement speed of the second viewpoint required for the generation of the virtual viewpoint video 78, the second movement speed relation information 88F is included in the second advertisement region relation information 88 (see Fig. 30). In addition, as the information related to the movement time to be compared with the second movement speed relation information 88F in a case in which the rate of match between the second advertisement region relation information 88 and the advertisement video relation information 84 is determined, the third movement speed relation information 84G is included in the advertisement video relation information 84 (see Fig. 31). Therefore, with the present configuration, the advertisement video 60B for the second advertisement region selected from among the plurality of advertisement videos 60 based on the movement speed of the second viewpoint and the movement speed decided in advance as the movement speed of the third viewpoint required for the generation of the virtual viewpoint video can be shown to the user 14 who views the virtual viewpoint video 78, via the second advertisement region 86.

### [Seventh Modification Example]

Hereinafter, a seventh modification example of the image processing apparatus 10 will be described.

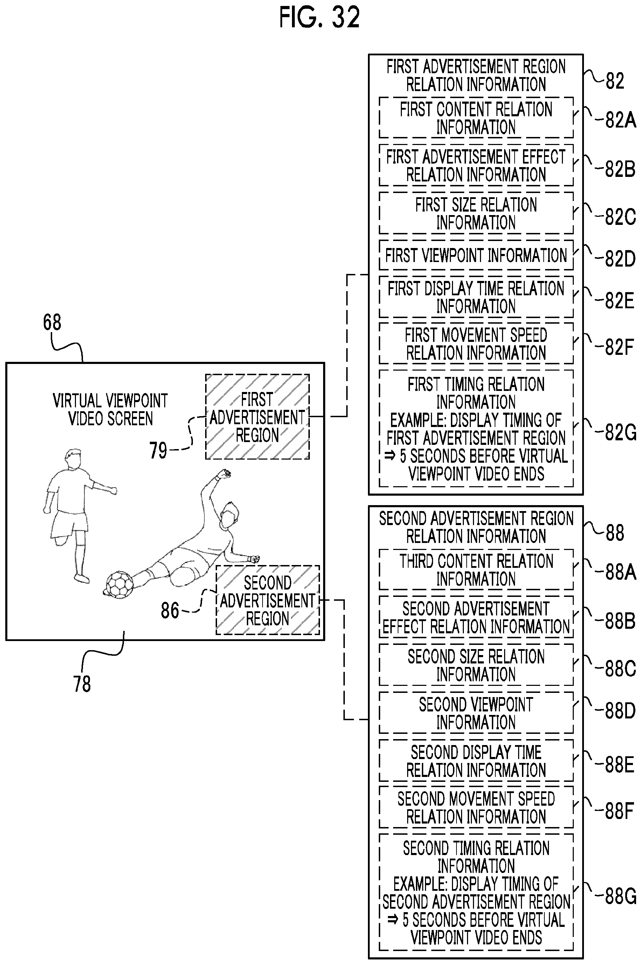

As shown in Fig. 32 as an example, the first advertisement region relation information 82 further includes first timing relation information 82G. The first timing relation information 82G is information related to a timing (for example, a timing at which the first advertisement region 79 is displayed to be superimposed on the virtual viewpoint video 78) at which the first advertisement region 79 is included in the virtual viewpoint video 78 (in the example shown in Fig. 32, the virtual viewpoint video screen 68). A first example of the timing at which the first advertisement region 79 is included in the virtual viewpoint video 78 is a timing at which the display of the virtual viewpoint video 78 is started. A second example of the timing at which the first advertisement region 79 is included in the virtual viewpoint video 78 is several seconds (for example, 5 seconds) after the display of the virtual viewpoint video 78 is started. A third example of the timing at which the first advertisement region 79 is included in the virtual viewpoint video 78 is a timing at which the display of the virtual viewpoint video 78 ends. A fourth example of the timing at which the first advertisement region 79 is included in the virtual viewpoint video 78 is several seconds (for example, 5 seconds) before the timing at which the display of the virtual viewpoint video 78 ends. The timing at which the first advertisement region 79 is included in the virtual viewpoint video 78 is decided, for example, by the producer of the advertisement video 60 and/or the producer of the image processing system 2.

The second advertisement region relation information 88 further includes second timing relation information 88G. The second timing relation information 88G is information related to a timing (for example, a timing at which the second advertisement region 86 is displayed to be superimposed on the virtual viewpoint video 78) at which the second advertisement region 86 is included in the virtual viewpoint video 78 (in the example shown in Fig. 32, the virtual viewpoint video screen 68). A first example of the timing at which the second advertisement region 86 is included in the virtual viewpoint video 78 is a timing at which the display of the virtual viewpoint video 78 is started. A second example of the timing at which the second advertisement region 86 is included in the virtual viewpoint video 78 is several seconds (for example, 5 seconds) after the display of the virtual viewpoint video 78 is started. A third example of the timing at which the second advertisement region 86 is included in the virtual viewpoint video 78 is a timing at which the display of the virtual viewpoint video 78 ends. A fourth example of the timing at which the second advertisement region 86 is included in the virtual viewpoint video 78 is several seconds (for example, 5 seconds) before the timing at which the display of the virtual viewpoint video 78 ends. The timing at which the second advertisement region 86 is included in the virtual viewpoint video 78 is decided, for example, by the producer of the advertisement video 60 and/or the producer of the image processing system 2.

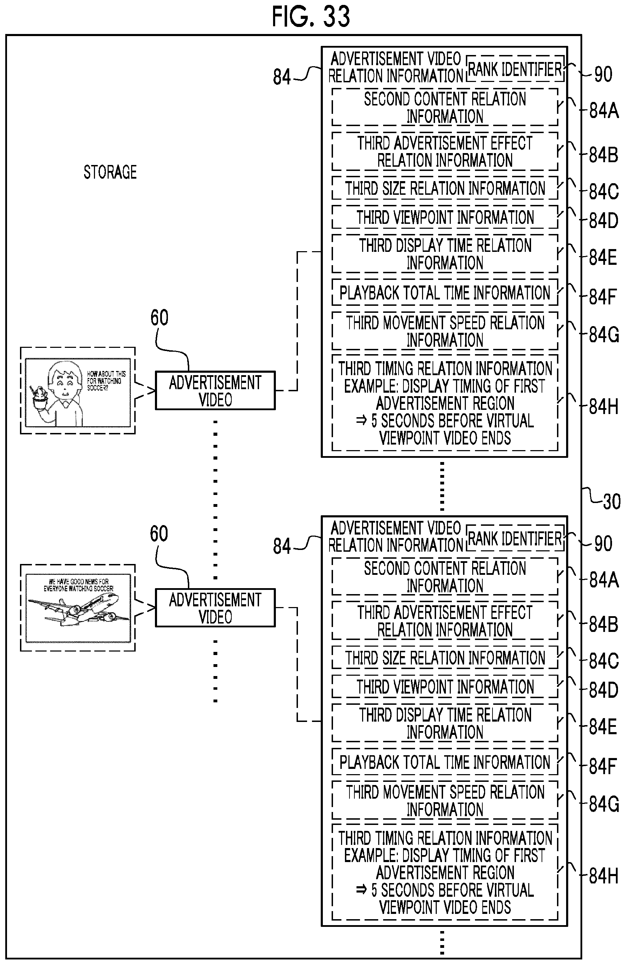

As shown in Fig. 33 as an example, the advertisement video relation information 84 further includes third timing relation information 84H. The third timing relation information 84H is information related to a timing (for example, a timing being displayed in the virtual viewpoint video 78) at which the advertisement video 60 is included in the virtual viewpoint video 78 (in the example shown in Fig. 33, the virtual viewpoint video screen 68). A first example of the timing at which the advertisement video 60 is included in the virtual viewpoint video 78 is a timing at which the display of the virtual viewpoint video 78 is started. A second example of the timing at which the advertisement video 60 is included in the virtual viewpoint video 78 is several seconds (for example, 5 seconds) after the display of the virtual viewpoint video 78 is started. A third example of the timing at which the advertisement video 60 is included in the virtual viewpoint video 78 is a timing at which the display of the virtual viewpoint video 78 ends. A fourth example of the timing at which the advertisement video 60 is included in the virtual viewpoint video 78 is several seconds (for example, 5 seconds) before the timing at which the display of the virtual viewpoint video 78 ends. The third timing relation information 84H is, for example, a time decided by the side that provides the advertisement video 60 to the user 14, the producer of the advertisement video 60, and/or the producer of the image processing system 2.

As described above, in the image processing apparatus 10 according to the seventh modification example, as the information related to the timing at which the first advertisement region 79 is included in the virtual viewpoint video 78, the first timing relation information 82G is included in the first advertisement region relation information 82 (see Fig. 32). In addition, as the information related to the timing to be compared with the first timing relation information 82G in a case in which the rate of match between the first advertisement region relation information 82 and the advertisement video relation information 84 is determined, the third timing relation information 84H is included in the advertisement video relation information 84 (see Fig. 33). Therefore, with the present configuration, the advertisement video 60A for the first advertisement region selected from among the plurality of advertisement videos 60 based on the timing at which the first advertisement region 79 is included in the virtual viewpoint video 78 and the timing at which the advertisement video 60 is included in the virtual viewpoint video 78 (for example, the advertisement video 60 with which the advertisement video relation information 84 including the third timing relation information 84H in which the timing at which the first advertisement region 79 is included in the virtual viewpoint video 78 matches the timing at which the advertisement video 60 is included in the virtual viewpoint video 78 is associated) can be shown to the user 14 who views the virtual viewpoint video 78, via the first advertisement region 79.

In addition, in the image processing apparatus 10 according to the seventh modification example, as the information related to the timing at which the first advertisement region 79 is included in the virtual viewpoint video 78, the second timing relation information 88G is included in the second advertisement region relation information 88 (see Fig. 32). In addition, as the information related to the timing to be compared with the second timing relation information 88G in a case in which the rate of match between the second advertisement region relation information 88 and the advertisement video relation information 84 is determined, the third timing relation information 84H is included in the advertisement video relation information 84 (see Fig. 33). Therefore, with the present configuration, the advertisement video 60B for the second advertisement region selected from among the plurality of advertisement videos 60 based on the timing at which the second advertisement region 86 is included in the virtual viewpoint video 78 and the timing at which the advertisement video 60 is included in the virtual viewpoint video 78 (for example, the advertisement video 60 with which the advertisement video relation information 84 including the third timing relation information 84H in which the timing at which the second advertisement region 86 is included in the virtual viewpoint video 78 matches the timing at which the advertisement video 60 is included in the virtual viewpoint video 78 is associated) can be shown to the user 14 who views the virtual viewpoint video 78, via the second advertisement region 86.

### [Eighth Modification Example]

A weight may be given by the side that provides the advertisement video 60 to the user 14, the producer of the advertisement video 60, and/or the producer of the image processing system 2 to the second content relation information 84A, the third advertisement effect relation information 84B, the third size relation information 84C, the third viewpoint information 84D, the third display time relation information 84E, the playback total time information 84F, the third movement speed relation information 84G, and the third timing relation information 84H included in the advertisement video relation information 84. In this case, a value obtained by multiplying the weight is used as the rate of match between the various types of information included in the first advertisement region relation information 82 and the various types of information included in the advertisement video relation information 84. For example, in a case in which a weight of " 1" is given to one of the plurality of pieces of information included in the advertisement video relation information 84 and a weight of "0" is given to the remaining information, only the rate of match related to the information to which the weight of "1" is given is calculated.

In addition, similarly, a weight may also be given by the producer of the advertisement video 60 and/or the producer of the image processing system 2 to various types of information included in the first advertisement region relation information 82 and/or various types of information included in the second advertisement region relation information 88.

### [Ninth Modification Example]

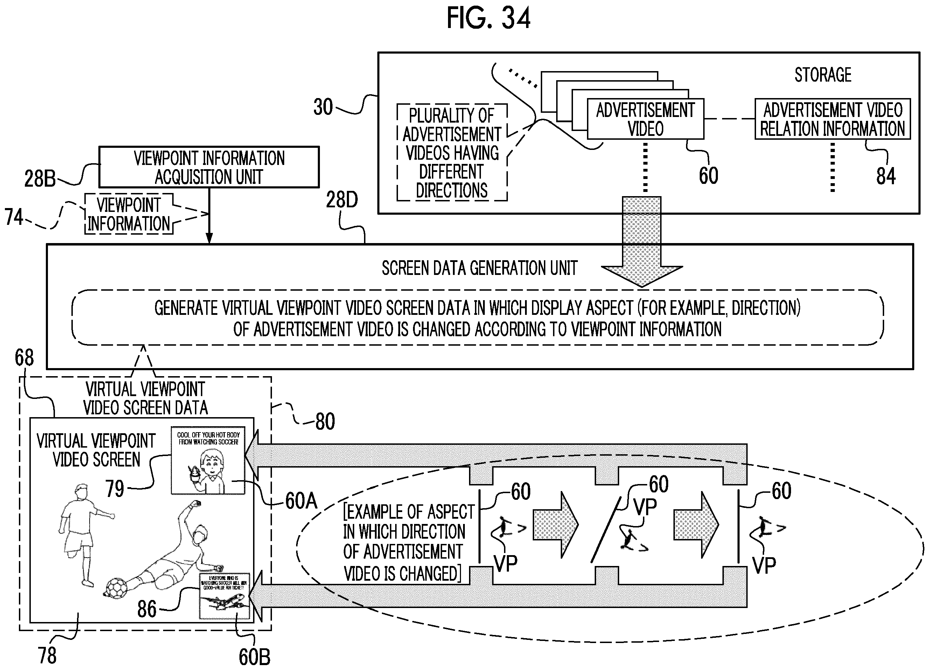

As shown in Fig. 34 as an example, a display aspect of the advertisement video 60 may be changed according to a viewpoint VP. In this case, for example, one advertisement video relation information 84 and the plurality of advertisement videos 60 having different directions are stored in the storage 30 in a state of being associated with each other. The plurality of advertisement videos 60 having different directions refer to videos having a plurality of patterns indicating an aspect in a case in which the advertisement indicated by the advertisement video 60 is observed from a plurality of directions.

In a case in which the advertisement video 60A for the first advertisement region is displayed in the first advertisement region 79, the screen data generation unit 28D acquires, as the advertisement video 60A for the first advertisement region, the advertisement video 60 having the direction having the highest rate of match with a direction (for example, the visual line direction) of the viewpoint VP specified from the viewpoint information 74 acquired by the viewpoint information acquisition unit 28B from among the plurality of advertisement videos 60 with which the advertisement video relation information 84 having the highest rate of match with the first advertisement region relation information 82 is associated, that is, the plurality of advertisement videos 60 having different directions.

Then, the screen data generation unit 28D generates the virtual viewpoint video screen data 80 including the first advertisement region 79 in which the advertisement video 60A for the first advertisement region is displayed. Each time the content of the viewpoint information 74 is updated, the same processing is performed by the screen data generation unit 28D, so that the virtual viewpoint video screen data 80 indicating the virtual viewpoint video screen 68 in which the direction of the advertisement video 60Afor the first advertisement region is changed according to the viewpoint information 74 is generated. As a result, as compared with a case in which the direction of the advertisement video 60A for the first advertisement region is always fixed regardless of the viewpoint VP (in a case in which there is only one pattern), the advertisement video 60A for the first advertisement region can be shown, in an appropriate direction according to the viewpoint VP, to the user 14 who views the virtual viewpoint video 78, via the first advertisement region 79.

In addition, in a case in which the advertisement video 60B for the second advertisement region is displayed in the second advertisement region 86, the screen data generation unit 28D acquires, as the advertisement video 60B for the second advertisement region, the advertisement video 60 having the direction having the highest rate of match with a direction (for example, the visual line direction) of the viewpoint VP specified from the viewpoint information 74 acquired by the viewpoint information acquisition unit 28B from among the plurality of advertisement videos 60 with which the advertisement video relation information 84 having the highest rate of match with the second advertisement region relation information 88 is associated, that is, the plurality of advertisement videos 60 having different directions.

Then, the screen data generation unit 28D generates the virtual viewpoint video screen data 80 including the second advertisement region 86 in which the advertisement video 60B for the second advertisement region is displayed. Each time the content of the viewpoint information 74 is updated, the same processing is performed by the screen data generation unit 28D, so that the virtual viewpoint video screen data 80 indicating the virtual viewpoint video screen 68 in which the direction of the advertisement video 60B for the second advertisement region is changed according to the viewpoint information 74 is generated. As a result, as compared with a case in which the direction of the advertisement video 60B for the second advertisement region is always fixed regardless of the viewpoint VP (in a case in which there is only one pattern), the advertisement video 60B for the second advertisement region can be shown, in an appropriate direction according to the viewpoint VP, to the user 14 who views the virtual viewpoint video 78, via the second advertisement region 86.

In the example shown in Fig. 34, examples of the display aspect of the advertisement video 60 include the direction, but the technology of the present disclosure is not limited to this, and the brightness of the advertisement video 60 and/or the contrast of the advertisement video 60 may be applied as the display aspect of the advertisement video 60, together with the direction of the advertisement video 60 or instead of the direction of the advertisement video 60.

### [Tenth Modification Example]

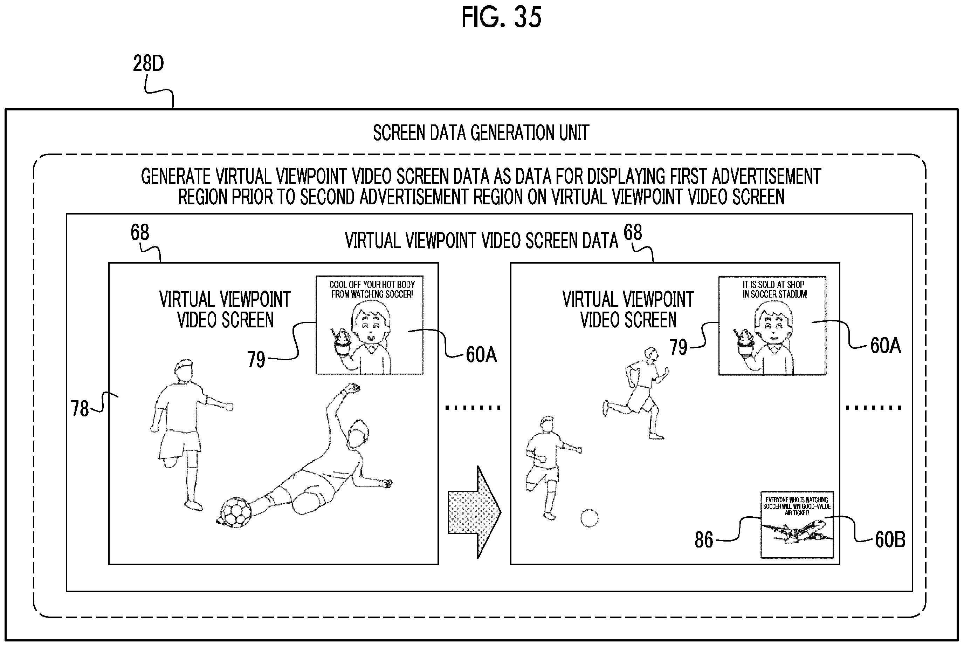

The timings at which the first advertisement region 79 and the second advertisement region 86 are displayed in the virtual viewpoint video screen 68 may be different from each other. In this case, for example, as shown in Fig. 35, the screen data generation unit 28D generates the virtual viewpoint video screen data 80 as data for displaying the first advertisement region 79 including the advertisement video 60A for the first advertisement region on the virtual viewpoint video screen 68 prior to the second advertisement region 86 including the advertisement video 60B for the second advertisement region. On the contrary, the screen data generation unit 28D may generate the virtual viewpoint video screen data 80 as data for displaying the second advertisement region 86 including the advertisement video 60B for the second advertisement region on the virtual viewpoint video screen 68 prior to the first advertisement region 79 including the advertisement video 60A for the first advertisement region.

It should be noted that a display order of the first advertisement region 79 including the advertisement video 60Afor the first advertisement region and the second advertisement region 86 including the advertisement video 60B for the second advertisement region may be, for example, decided according to various types of information included in the first advertisement region relation information 82 and/or various types of information included in the second advertisement region relation information 88, may be decided according to various types of information included in the advertisement video relation information 84, such as the rank identifier 90, or may be decided according to an indication received by the reception device 50 or the like.

In this way, by making the timings at which the first advertisement region 79 and the second advertisement region 86 are displayed in the virtual viewpoint video screen 68 different from each other, it is possible to differentiate between the advertisement effect by the advertisement video 60A for the first advertisement region and the advertisement effect by the advertisement video 60B for the second advertisement region.

In addition, in each of the embodiments and each of the modification examples described above, the form example is described in which the screen generation processing is executed by the computer 22 of the image processing apparatus 10, but the technology of the present disclosure is not limited to this. The screen generation processing may be executed by the computer 40 of the user device 12, or the distributed processing may be performed by the computer 22 of the image processing apparatus 10 and the computer 40 of the user device 12.

In addition, in each of the embodiments and each of the modification examples described above, the computer 22 is described as an example, but the technology of the present disclosure is not limited to this. For example, instead of the computer 22, a device including an ASIC, an FPGA, and/or a PLD may be applied. Moreover, instead of the computer 22, a hardware configuration and a software configuration may be used in combination. The same applies to the computer 40 of the user device 12.

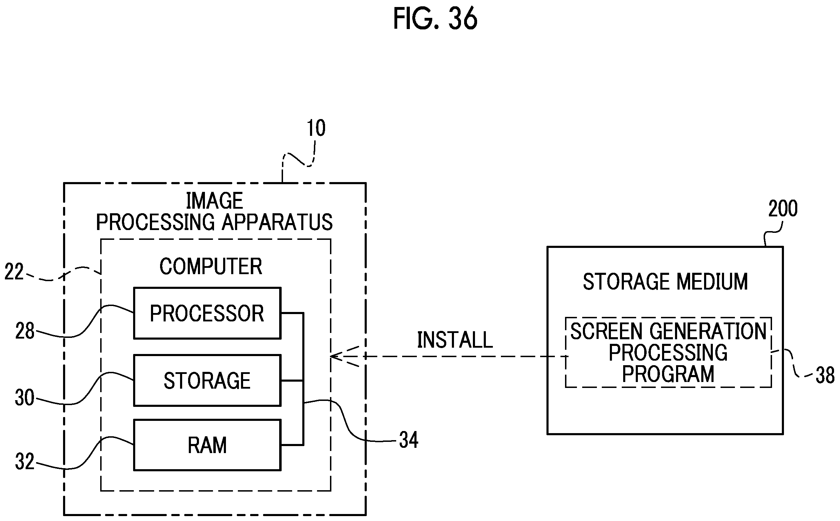

In addition, in each of the embodiments and each of the modification examples described above, the screen generation processing program 38 is stored in the storage 30, but the technology of the present disclosure is not limited to this, and as shown in Fig. 36 as an example, the screen generation processing program 38 may be stored in any portable storage medium 200, such as an SSD or a USB memory, which is a non-transitorily storage medium. In this case, by installing the screen generation processing program 38 stored in the storage medium 200 in the computer 22, and the processor 28 executes the screen generation processing according to the screen generation processing program 38.

In addition, the screen generation processing program 38 may be stored in a memory of another computer, a server device, or the like connected to the computer 22 via a communication network (not shown), and the screen generation processing program 38 may be downloaded to the image processing apparatus 10 in response to a request from the image processing apparatus 10. In this case, the screen generation processing is executed by the processor 28 of the computer 22 according to the downloaded screen generation processing program 38.

In addition, although the processor 28 is described as an example in the examples described above, at least one CPU, at least one GPU, and/or at least one TPU may be used instead of the processor 28 or together with the processor 28.

The following various processors can be used as a hardware resource for executing the screen generation processing. As described above, examples of the processor include the CPU, which is a general-purpose processor that functions as the hardware resource for executing the screen generation processing according to software, that is, the program. In addition, another example of the processor includes a dedicated electric circuit which is a processor having a circuit configuration specially designed for executing the dedicated processing, such as the FPGA, the PLD, or the ASIC. The memory is built in or connected to any processor, and any processor executes the screen generation processing by using the memory.

The hardware resource for executing the screen generation processing may be configured by one of these various processors, or may be configured by a combination (for example, a combination of a plurality of FPGAs or a combination of the CPU and the FPGA) of two or more processors of the same type or different types. In addition, the hardware resource for executing the screen generation processing may be one processor.

A first example in which the hardware resource is configured by one processor is a form in which one processor is configured by a combination of one or more CPUs and software, and the processor functions as the hardware resource for executing the screen generation processing, as represented by a computer, such as a client and a server. A second example thereof is a form in which a processor that realizes the functions of the entire system including a plurality of hardware resources for executing the screen generation processing with one IC chip is used, as represented by SoC. As described above, the screen generation processing is realized by using one or more of the various processors as the hardware resources.

Further, as the hardware structures of these various processors, more specifically, an electric circuit in which circuit elements, such as semiconductor elements, are combined can be used.

Also, the screen generation processing described above is merely an example. Therefore, it is needless to say that unnecessary steps may be deleted, new steps may be added, or the processing order may be changed within a range that does not deviate from the gist.

The described contents and the shown contents are the detailed description of the parts according to the technology of the present disclosure, and are merely examples of the technology of the present disclosure. For example, the description of the configuration, the function, the action, and the effect are the description of examples of the configuration, the function, the action, and the effect of the parts according to the technology of the present disclosure. Accordingly, it is needless to say that unnecessary parts may be deleted, new elements may be added, or replacements may be made with respect to the described contents and the shown contents within a range that does not deviate from the gist of the technology of the present disclosure. In addition, in order to avoid complications and facilitate understanding of the parts according to the technology of the present disclosure, the description of common technical knowledge or the like, which does not particularly require the description for enabling the implementation of the technology of the present disclosure, is omitted in the described contents and the shown contents.

In the present specification, "A and/or B" is synonymous with "at least one of A or B". That is, "A and/or B" means that it may be only A, only B, or a combination of A and B. In addition, in the present specification, in a case in which three or more matters are associated and expressed by "and/or", the same concept as "A and/or B" is applied.

All documents, patent applications, and technical standards described in the present specification are incorporated into the present specification by reference to the same extent as in a case in which the individual documents, patent applications, and technical standards are specifically and individually stated to be described by reference.

## Claims

1. An image processing apparatus comprising:
a processor; and
a memory connected to or built in the processor,
wherein the processor
acquires a virtual viewpoint image generated based on a plurality of captured images, and
outputs, based on first information associated with a first region related to the virtual viewpoint image and specific image relation information related to a plurality of specific images that are not included in the plurality of captured images, first data for displaying a first specific image selected from among the plurality of specific images in the first region.

2. The image processing apparatus according to claim 1,
wherein the first information includes first content relation information related to a content of the virtual viewpoint image.

3. The image processing apparatus according to claim 2,
wherein the specific image relation information includes second content relation information related to a content of the specific image, and
the first specific image is a specific image related to the specific image relation information including the second content relation information corresponding to the first content relation information among the plurality of specific images.

4. The image processing apparatus according to any one of claims 1 to 3,
wherein the first information includes first advertisement effect relation information related to an advertisement effect.

5. The image processing apparatus according to any one of claims 1 to 4,
wherein the first information includes first size relation information related to a size in which the first specific image is displayed in the first region.

6. The image processing apparatus according to any one of claims 1 to 5,
wherein the first information includes first viewpoint information required for generation of the virtual viewpoint image.

7. The image processing apparatus according to claim 6,
wherein the first viewpoint information includes information related to a first viewpoint path.

8. The image processing apparatus according to any one of claims 1 to 7,
wherein the first information includes first display time relation information related to a time in which the first region is displayed.

9. The image processing apparatus according to claim 8,
wherein the first display time relation information is information related to a time in which the first region is continuously displayed.

10. The image processing apparatus according to claim 8 or 9,
wherein the specific image is a moving image,
the specific image relation information includes a playback total time of the moving image, and
the processor generates the first data based on the first display time relation information and the playback total time.

11. The image processing apparatus according to any one of claims 8 to 10,
wherein the specific image is a moving image,
the specific image relation information includes a playback total time of the moving image, and
the processor selects the first specific image based on the first display time relation information and the playback total time.

12. The image processing apparatus according to any one of claims 1 to 11,
wherein the virtual viewpoint image is a moving image, and
the first information includes first timing relation information related to a timing at which the first region is included in the virtual viewpoint image.

13. The image processing apparatus according to any one of claims 1 to 12,
wherein the first information includes first movement speed relation information related to a movement speed of a first viewpoint required for generation of the virtual viewpoint image.

14. The image processing apparatus according to any one of claims 1 to 13,
wherein the first information is changed according to at least one of a viewpoint position, a visual line direction, or an angle of view required for generation of the virtual viewpoint image.

15. The image processing apparatus according to any one of claims 1 to 14,
wherein the processor further outputs, based on second information associated with a second region related to the virtual viewpoint image and the specific image relation information, second data for displaying a second specific image selected from among the plurality of specific images in the second region.

16. The image processing apparatus according to claim 15,
wherein the second information includes second advertisement effect relation information related to an advertisement effect.

17. The image processing apparatus according to claim 15 or 16,
wherein the second information includes second size relation information related to a size in which the second specific image is displayed in the second region.

18. The image processing apparatus according to any one of claims 15 to 17,
wherein the second information includes second viewpoint information required for generation of the virtual viewpoint image.

19. The image processing apparatus according to claim 18,
wherein the second viewpoint information includes information related to a second viewpoint path.

20. The image processing apparatus according to any one of claims 15 to 19,
wherein the second information includes second display time relation information related to a time in which the second region is displayed.

21. The image processing apparatus according to claim 20,
wherein the second display time relation information is information related to a time in which the second region is continuously displayed.

22. The image processing apparatus according to claim 20,
wherein the specific image is a moving image,
the specific image relation information includes a playback total time of the moving image, and
the processor generates the second data based on the second display time relation information and the playback total time.

23. The image processing apparatus according to any one of claims 20 to 22,
wherein the specific image is a moving image,
the specific image relation information includes a playback total time of the moving image, and
the processor selects the second specific image based on the second display time relation information and the playback total time.

24. The image processing apparatus according to any one of claims 15 to 23,
wherein the virtual viewpoint image is a moving image, and
the second information includes second timing relation information related to a timing at which the second region is included in the virtual viewpoint image.

25. The image processing apparatus according to any one of claims 15 to 24,
wherein the second information includes second movement speed relation information related to a movement speed of a second viewpoint required for generation of the virtual viewpoint image.

26. The image processing apparatus according to any one of claims 15 to 25,
wherein the second information is changed according to at least one of a viewpoint position, a visual line direction, or an angle of view required for generation of the virtual viewpoint image.

27. The image processing apparatus according to any one of claims 1 to 26,
wherein the specific image relation information includes charge information of a side that provides the specific image.

28. The image processing apparatus according to any one of claims 1 to 27,
wherein a display aspect of the specific image is changed according to a viewpoint used for generation of the virtual viewpoint image.

29. An image processing apparatus comprising:
a processor; and
a memory connected to or built in the processor,
wherein the processor
acquires a virtual viewpoint image generated based on a plurality of captured images, and
outputs, based on region relation information associated with a plurality of regions related to the virtual viewpoint image and specific image relation information related to a specific image that is not included in the plurality of captured images, data for displaying the specific image in at least one of the plurality of regions.

30. The image processing apparatus according to claim 29,
wherein timings at which the plurality of regions are displayed are different from each other.

31. An image processing method comprising:
acquiring a virtual viewpoint image generated based on a plurality of captured images; and
outputting, based on first information associated with a first region related to the virtual viewpoint image and specific image relation information related to a plurality of specific images that are not included in the plurality of captured images, first data for displaying a first specific image selected from among the plurality of specific images in the first region.

32. An image processing method comprising:
acquiring a virtual viewpoint image generated based on a plurality of captured images; and
outputting, based on region relation information associated with a plurality of regions related to the virtual viewpoint image and specific image relation information related to a specific image that is not included in the plurality of captured images, data for displaying the specific image in at least one of the plurality of regions.

33. A program for causing a computer to execute a process comprising:
acquiring a virtual viewpoint image generated based on a plurality of captured images; and
outputting, based on first information associated with a first region related to the virtual viewpoint image and specific image relation information related to a plurality of specific images that are not included in the plurality of captured images, first data for displaying a first specific image selected from among the plurality of specific images in the first region.

34. A program for causing a computer to execute a process comprising:
acquiring a virtual viewpoint image generated based on a plurality of captured images; and
outputting, based on region relation information associated with a plurality of regions related to the virtual viewpoint image and specific image relation information related to a specific image that is not included in the plurality of captured images, data for displaying the specific image in at least one of the plurality of regions.
